(19) **Europäisches Patentamt**
**European Patent Office**
**Office européen des brevets**

(11) **EP 2 380 382 B1**

(12) **EUROPÄISCHE PATENTSCHRIFT**

(45) Veröffentlichungstag und Bekanntmachung des Hinweises auf die Patenterteilung:
**20.04.2016 Patentblatt 2016/16**

(51) Int Cl.:
**H04W 52/02** *(2009.01)*     *H04W 24/00* *(2009.01)*

(21) Anmeldenummer: **09775145.7**

(22) Anmeldetag: **02.12.2009**

(86) Internationale Anmeldenummer:
**PCT/EP2009/066224**

(87) Internationale Veröffentlichungsnummer:
**WO 2010/083914 (29.07.2010 Gazette 2010/30)**

(54) **AKTIVIERUNG EINES NETZWERKKNOTENS AUS EINEM SCHLAFBETRIEBSMODUS DURCH VERIFIZIERUNG EINES EMPFANGENEN GEHEIMEN AUFWECK-TOKENS**

ACTIVATION OF A NETWORK NODE FROM A SLEEP OPERATING MODE BY VERIFYING A RECEIVED SECRET WAKE-UP TOKEN

ACTIVATION D'UN NOEUD DE RÉSEAU À PARTIR D'UN MODE SOMMEIL PAR VÉRIFICATION D'UN JETON D'ACTIVATION SECRET REÇU

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.01.2009 DE 102009005187**

(43) Veröffentlichungstag der Anmeldung:
**26.10.2011 Patentblatt 2011/43**

(73) Patentinhaber: **Siemens Aktiengesellschaft 80333 München (DE)**

(72) Erfinder:
- **FALK, Rainer**
  **85435 Erding (DE)**
- **HOF, Hans-Joachim**
  **85057 München (DE)**

(56) Entgegenhaltungen:
**WO-A1-00/33598**     **JP-A- 2008 283 460**
**US-A1- 2005 138 377**     **US-A1- 2006 112 287**
**US-B1- 6 493 824**

**Beschreibung**

Die Erfindung betrifft ein Verfahren zum Aktivieren eines aufzuweckenden Netzwerkknotens eines drahtlosen Netzwerkes.

Drahtlose Netzwerke, deren Knoten über eine drahtlose Funkschnittstelle kommunizieren, werden in vielfältigen Anwendungsgebieten eingesetzt. Beispielsweise dienen drahtlose Sensornetzwerke oder Sensor-Aktor-Netzwerke zur Überwachung und Steuerung von Fertigungsanlagen, von chemischen Prozessen oder zur Überwachung von Pipelines. Diese Sensorknoten beziehungsweise Sensor-Aktor-Knoten kommunizieren drahtlos miteinander über eine Funkschnittstelle, um Messwerte und Steuerkommandos auszutauschen.

Derartige drahtlose Netzwerke umfassen meist Netzwerkknoten, deren Energieversorgung durch eine in dem Knoten enthaltene Batterie bereitgestellt wird. Bei solchen batteriebetriebenen Netzwerkknoten ist deren Lebenszeit beziehungsweise Betriebszeit durch die in der Batterie gespeicherte Energie beschränkt. Sobald die Batterie leer ist, können die in dem Netzwerkknoten enthaltenen Schaltungen nicht mit Strom versorgt werden und funktionieren nicht mehr. Um die Lebenszeit eines Netzwerkknotens zu erhöhen, wird daher der Netzwerkknoten unter bestimmten Umständen in einen Schlaf-Betriebsmodus versetzt, bei welchem Komponenten beziehungsweise Schaltungen innerhalb des Netzwerkknotens zumindest teilweise deaktiviert werden, damit der Energieverbrauch des Netzwerkknotens abgesenkt wird. Dabei wird eine der Schaltungsanordnungen des Netzwerkknotens für ein drahtloses Netzwerk durch die Funkschnittstelle beziehungsweise eine Sende- und Empfangseinheit innerhalb des Netzwerkknotens gebildet. Da diese Sende- und Empfangseinheit relativ viel Energie verbraucht, können große Energieeinsparungen beziehungsweise eine signifikante Erhöhung der Lebenszeit erreicht werden, wenn auch die Sende- und Empfangseinheit in einem Schlafbetriebsmodus versetzt beziehungsweise deaktiviert wird. Eine Deaktivierung der Sende- und Empfangseinheit beschränkt allerdings die Erreichbarkeit beziehungsweise die Kommunikation mit dem jeweiligen Netzwerkknoten. Es können auch weitere Komponenten, wie beispielsweise eine Verarbeitungseinheit (Mikroprozessor) in einen energiesparenden Schlafzustand versetzt werden.

Um die Deaktivierung der Sende- und Empfangseinheit beziehungsweise des Funkmoduls eines drahtlosen Netzwerkknotens zu ermöglich und gleichzeitig die Erreichbarkeit beziehungsweise eine drahtlose Kommunikation mit dem Netzwerkknoten sicherzustellen, wird daher herkömmlicherweise ein drahtloser Netzwerkknoten mit einer zusätzlichen Sende- und Empfangseinheit beziehungsweise Empfangskomponente versehen, welche lediglich dafür vorgesehen ist, den jeweiligen Netzwerkknoten aus einem Schlafzustand aufzuwecken beziehungsweise aus einem Schlafbetriebsmodus in einen normalen Arbeitsbetriebsmodus zu versetzen. Diese zusätzliche Sende- und Empfangskomponente wird auch als Wake-Up-Radio beziehungsweise als Aufweckfunkschnittstelle bezeichnet. Um mit dem Netzwerkknoten zu kommunizieren, sendet dabei ein Sender, der sich beispielsweise in einem anderen Netzwerkknoten befindet, ein Aufweck- beziehungsweise ein Wake-Up-Signal an die Wake-Up-Sende- und Empfangskomponente des aufzuweckenden Netzwerkknotens, wobei der empfangene aufzuweckende Netzwerkknoten durch das Wake-Upbeziehungsweise Aufwecksignal von dem Schlafbetriebsmodus in einen normalen Arbeitsbetriebsmodus versetzt beziehungsweise geschaltet wird. Sobald sich der Netzwerkknoten in dem normalen Arbeitsbetriebsmodus befindet, kann der Sender die gewünschte Nachricht an den Netzwerkknoten übermitteln, welche von der dafür vorgesehenen und aktivierten Sende- und Empfangseinrichtung beziehungsweise dem Funkmodul des Netzwerkknoten empfangen wird. Das Wake-Up-Radio beziehungsweise die zusätzliche Sende- und Empfangskomponente, die für das Aufwecksignal vorgesehen ist, dabei derart ausgelegt, dass sie deutlich weniger Energie verbraucht als die gewöhnliche Hauptsende- und Empfangseinheit für den Empfang von Nachrichten.

Diese herkömmliche Vorgehensweise zum Aktivieren eines Netzwerkknotens mittels eines Aufwecksignals beziehungsweise eines Wake-Up-Signals schafft allerdings eine Angriffsmöglichkeit für einen Dritten auf den Netzwerkknoten beziehungsweise das drahtlose Netzwerk. Ein Angreifer kann nämlich den begrenzten Energievorrat der batteriebetriebenen Netzwerkknoten des drahtlosen Netzwerkes in relativ kurzer Zeit erschöpfen, indem er die Netzwerkknoten durch Senden eines Aufwecksignals ständig aus dem Schlafbetriebsmodus aufweckt und in den normalen Betriebsmodus versetzt. Ein derartiger Angriff wird auch als Sleep Deprivation Angriff bezeichnet.

Aus der US 6,493,824 B1 ist ein Verfahren zum sicheren Aufwecken eines Computers durch eine Netzwerkkarte des Computers bekannt, bei welchem ein Datenpaket von einem Netzwerk empfangen wird, eine im Datenpaket enthaltene Zieladresse mit einer Zieladresse der Netzwerkkarte verglichen wird und innerhalb des Datenpakets nach einem Weckmuster gesucht wird. Falls die Zieladressen übereinstimmen und ein Weckmuster gefunden wird, wird ein verschlüsselter Wert des Datenpakets entschlüsselt und mit einem erwarteten Wert verglichen. Stimmen die Werte überein, wird ein Signal zum Aufwecken des Computers erzeugt.

Aus der US 2005/0138377 A1 ist ein Verfahren zur Authentifizierung und sicheren Kommunikation bekannt, bei welchem ein Benutzer-Endgerät, welches durch etwas anderes als eine Benutzer-Eingabe, z.B. durch ein Wecksignal, aus einem Schlafbetriebsmodus geweckt wird, auf Anfrage eines Servers Maschinendaten (machine credentials) zur Authentifizierung an den Server sendet. Erst nach erfolgreicher Authentifizierung wird eine Kommunikation mit dem Benutzer-Endgerät zugelassen.

Aus der US 2006/0112287 A1 ist ein Verfahren zum drahtlosen Wecken eines Computers über ein Computernetzwerk bekannt, bei dem über das Netzwerk ein Signal mit mindestens einer gerätespezifischen Aufweckdatensequenz verbreitet wird. Dabei beinhaltet jede Aufweckdatensequenz mehrere Iterationen der Hardware-Adresse der Drahtlos-Netzwerkkarte des betreffenden Geräts. Während eines Schlafmodus überwacht die Netzwerkkarte die drahtlosen Kanäle auf Datenpakete mit Aufweckdatensequenzen. Wird eine Aufweckdatensequenz empfangen, so wird diese mit der Hardware-Adress-Information der Netzwerkkarte verglichen. Bei Übereinstimmung wird das Gerät aufgeweckt.

Aus der WO 00/33598 ist ein Verfahren zur drahtlosen Aktivierung einer Mobilstation in einem drahtlosen Telekommunikationsnetzwerk bekannt, bei dem ein Challenge-Response-Verfahren eingesetzt wird, um eine Aktivierung nur durch Berechtigte Netzwerkteilnehmer zuzulassen.

Aus der JP 2008283460 A ist ein Verfahren zur drahtlosen Datenkommunikation bekannt, bei dem ein Sendeknoten auf Basis einer Netzwerkadresse eines Zielknotens Multiplex-Informationen des Zielknotens berechnet und ein Aufwecksignal auf Basis der berechneten Informationen an den Zielknoten überträgt, um einen Datenempfang durch den Zielknoten zu ermöglichen. Der Zielknoten wird dabei nur dann in einen aktiven Modus geschaltet, in welchem ein Datenempfang möglich ist, wenn das empfangene Aufweck-Signal mit eigenen Multiplex-Informationen des Zielknotens übereinstimmt.

Es ist daher eine Aufgabe der vorliegenden Erfindung, ein Verfahren zum sicheren Aktivieren eines aufzuweckenden Netzwerkknotens innerhalb eines drahtlosen Netzwerkes zu schaffen, das vor einem Sleep Deprivation Angriff schützt.

Diese Aufgabe wird erfindungsgemäß durch ein Verfahren mit den in Patentanspruch 1 angegebenen Merkmalen gelöst.

Die Erfindung schafft ein Verfahren zum Aktivieren eines aufzuweckenden Ziel-Netzwerkknotens eines drahtlosen Netzwerkes, wobei der Ziel-Netzwerkknoten aus einem Schlafbetriebsmodus geweckt wird, wenn eine integrierte Aufweckschaltung des Netzwerkknotens ein geheimes Aufweck-Token empfängt und es mittels einer vorgegebenen Prüffunktion und mindestens eines gespeicherten Aufweck-Token-Referenzwertes verifiziert,
wobei das Wecken des Zielnetzwerkknotens (SN) ein Aktivieren eines Haupt-Funkmoduls (2F) zum Senden und Empfangen von Nachrichten umfasst und wobei die Aufweckschaltung (2G) einen geringeren Energieverbrauch als das Haupt-Funkmodul hat (2F).

Zum Aufwecken des Netzwerkknotens wird bei dem erfindungsgemäßen Verfahren somit ein geheimes Aufweck-Token (Wake-Up-Token: WUT) eingesetzt, anstatt eines bekannten festen Wake-Up- beziehungsweise Aufwecksignals, das durch ein Wake-Up-Radio-Funkmodul empfangen wird. Das geheime Aufweck-Token (WUT) ist dabei vorzugsweise nur legitimen beziehungsweise authentifizierten Sende- und Empfangseinheiten bekannt.

Bei einer Ausführungsform des erfindungsgemäßen Verfahrens werden das geheime Aufweck-Token und der Aufweck-Token-Referenzwert durch den Ziel-Netzwerkknoten selbst generiert und vor einem Wechseln des Ziel-Netzwerkknotens in den Schlafbetriebsmodus an einen anderen Netzwerkknoten des Netzwerkes übertragen und beispielsweise dort zur späteren Aktivierung des Ziel-Netzwerkknotens gespeichert.

Bei einer alternativen Ausführungsform des erfindungsgemäßen Verfahrens werden das Aufweck-Token und der Aufweck-Token-Referenzwert durch einen anderen Netzwerkknoten des Netzwerkes generiert,
wobei der Aufweck-Token-Referenzwert vor einem Wechsel des Zielnetzwerkknotens in den Schlafbetriebsmodus an den Ziel-Netzwerkknoten übertragen und dort zur späteren Aktivierung des Ziel-Netzwerkknotens gespeichert wird.

Bei einer möglichen Ausführungsform des erfindungsgemäßen Verfahrens werden das Aufweck-Token und der Aufweck-Token-Referenzwert durch einen zentralen Sicherheits-Management-Knoten, eine Sicherheits-Management-Einheit, eine Komponente oder zum Beispiel einen Server generiert.

Bei dieser Ausführungsform innerhalb oder außerhalb mindestens ein Management-Knoten beziehungsweise ein Sicherheits-Management-Knoten SM (Security Manager) in dem drahtlosen Netzwerk vorhanden. Diese Ausführungsform erleichtert die Verwaltung und Kontrolle der generierten Aufweck-Token und Aufweck-Token-Referenzwerte für die verschiedenen Netzwerkknoten innerhalb des drahtlosen Netzwerkes. Bei dem Sicherheits-Management-Knoten SM kann es sich um einen eigenständigen separaten Knoten handeln. Alternativ können Sicherheits-Management-Funktionen auf einem anderen Knoten, zum Beispiel auf einen Gateway-Knoten implementiert sein.

Bei einer Ausführungsform des erfindungsgemäßen Verfahrens wird der generierte Aufweck-Token-Referenzwert von dem zentralen Sicherheits-Management-Knoten SM zu dem jeweiligen Ziel-Netzwerkknoten übertragen und vor einem Wechsel des Ziel-Netzwerkknotens in den Schlafbetriebsmodus in dem Ziel-Netzwerkknoten gespeichert.

Dabei wird das generierte Aufweck-Token vorzugsweise von dem zentralen Sicherheits-Management-Knoten einem weiteren Netzwerkknoten zum Aktivieren des Ziel-Netzwerkknotens bereitgestellt.

Bei einer Ausführungsform des erfindungsgemäßen Verfahrens wird der Aufweck-Token-Referenzwert durch den Ziel-Netzwerkknoten und das Aufweck-Token durch einen anderen Netzwerkknoten des drahtlosen Netzwerkes auf Basis eines gemeinsamen geheimen Schlüssels generiert.

In einer Ausführungsform des erfindungsgemäßen Verfahrens werden dabei der Aufweck-Token-Referenzwert und das Aufweck-Token mittels einer Schlüsselableitungsfunktion aus dem jeweiligen Schlüssel gebildet.

Bei einer möglichen Ausführungsform des erfindungsgemäßen Verfahrens ist die Schlüsselableitungsfunktion eine Hash-Funktion.

Bei einer möglichen Ausführungsform des erfindungsgemäßen Verfahrens werden das Aufweck-Token und der Aufweck-Token-Referenzwert nach jedem Aktivierungsvorgang des Ziel-Netzwerkknotens erneuert.

Bei einer weiteren Ausführungsform des erfindungsgemäßen Verfahrens werden das Aufweck-Token und der Aufweck-Token-Referenzwert nach einer vorbestimmten Anzahl von Aktivierungsvorgängen des Ziel-Netzwerkknotens erneuert.

Bei einer weiteren Ausführungsform des erfindungsgemäßen Verfahrens werden das Aufweck-Token und der Aufweck-Token-Referenzwert in vorgegebenen Zeitabständen erneuert.

Bei einer möglichen Ausführungsform des erfindungsgemäßen Verfahrens werden das Aufweck-Token und der gespeicherte Aufweck-Token-Referenzwert durch zwei benachbarte Glieder einer aus Hash-Werten bestehenden Hash-Kette gebildet.

Bei einer Ausführungsform des erfindungsgemäßen Verfahrens werden das Aufweck-Token und der Aufweck-Token-Referenzwert von einer Zeichenkette abgeleitet. Dabei kann die Zeichenkette des Aufweck-Tokens aus einer oder mehreren Zeichenfolgen zusammengesetzt werden.

Bei einer möglichen Ausführungsform des erfindungsgemäßen Verfahrens weist die zusammensetzbare Zeichenfolge einen Identifikationscode zur Identifizierung desjenigen Netzwerkknotens auf, welcher das Aufweck-Token an den Netzwerk-Knoten zu dessen Aktivierung aussendet.

Bei einer möglichen Ausführungsform des erfindungsgemäßen Verfahrens weist die zusammensetzbare Zeichenfolge einen Reason Code auf, welcher einen Grund für die Aktivierung des Ziel-Netzwerkknotens angibt.

Bei einer möglichen Ausführungsform des erfindungsgemäßen Verfahrens weist die zusammensetzbare Zeichenfolge einen Bedingungs-Weckcode auf, welcher eine Bedingung für die Aktivierung des Ziel-Netzwerkknotens angibt, wobei der Ziel-Netzwerkknoten aufgeweckt wird, wenn die Bedingung erfüllt ist. Die Bedingung wird vorzugsweise durch eine Baukomponente des Ziel-Netzwerkknotens geprüft.

Bei einer möglichen Ausführungsform des erfindungsgemäßen Verfahrens weist die zusammensetzbare Zeichenfolge eine Knotenadresse des Ziel-Netzwerkknotens auf.

Bei einer weiteren möglichen Ausführungsform des erfindungsgemäßen Verfahrens weist die zusammensetzbare Zeichenfolge einen vorgegebenen Weckcode auf.

Die Erfindung schafft ferner einen Netzwerkknoten für ein drahtloses Netzwerk mit einer integrierten Aufweckschaltung zum Versetzen des Netzwerkknotens aus einem Schlafbetriebsmodus in einen normalen Arbeitsbetriebmodus versetzt, falls die Aufweckschaltung ein geheimes Aufweck-Token empfängt und es mittels einer vorgegebenen Prüffunktion und mittels mindestens einem gespeicherten Aufweck-Token-Referenzwert verifiziert, wobei das Versetzen des Netzwerkknotens in den normalen Arbeitsbetriebsmodus (SN) ein Aktivieren eines Haupt-Funkmoduls (2G) zum Senden und Empfangen von Nachrichten umfasst und wobei die Aufweckschaltung (2G) einen geringeren Energieverbrauch als das Haupt-Funkmodul hat (2F).

Bei einer Ausführungsform des erfindungsgemäßen Netzwerkknotens weist der Netzwerkknoten einen Speicher zum Speichern des Aufweck-Token-Referenzwertes auf.

Bei einer Ausführungsform des erfindungsgemäßen Netzwerkknotens weist der Netzwerkknoten einen Sensor-Netzwerkknoten mit mindestens einem Sensor auf.

Bei einer weiteren Ausführungsform des erfindungsgemäßen Netzwerkknotens wird der Netzwerkknoten durch ein tragbares Telekommunikationsendgerät gebildet.

Bei diesem Telekommunikationsendgerät kann es sich um ein mobiles Telefon, einen Laptop oder um einen PDA handeln.

Die Erfindung schafft ferner ein drahtloses Netzwerk mit mehreren Netzwerkknoten, die jeweils eine integrierte Aufweckschaltung aufweisen, die den zugehörigen Netzwerkknoten aus einem Schlafbetriebsmodus in einen normalen Arbeitsbetriebsmodus versetzt, falls ein empfangenes geheimes Aufweck-Token mittels einer vorgegebenen Prüffunktion und mindestens eines gespeicherten Aufweck-Token-Referenzwertes verifiziert wird, wobei das Versetzen des Zielnetzwerkknotens in den normalen Arbeitsbetriebsmodus (SN) ein Aktivieren eines Haupt-Funkmoduls (2G) zum Senden und Empfangen von Nachrichten umfasst und wobei die Aufweckschaltung (2G) einen geringeren Energieverbrauch als das Haupt-Funkmodul hat (2F).

Die Erfindung schafft ferner ein Computerprogramm mit Programmbefehlen zur Durchführung eines Verfahrens zur Aktivierung eines aufzuweckenden Zielnetzwerkknotens eines drahtlosen Netzwerkes, wenn das Computerprogramm ausgeführt wird,

wobei der Ziel-Netzwerkknoten aus einem Schlafbetriebsmodus geweckt wird,

falls der Ziel-Netzwerkknoten ein empfangenes geheimes Aufweck-Token mittels einer vorgegebenen Prüffunktion und mindestens eines gespeicherten Aufweck-Token-Referenzwertes verifiziert,

wobei das Wecken des Zielnetzwerkknotens (SN) ein Aktivieren eines Haupt-Funkmoduls (2G) zum Senden und Empfangen von Nachrichten umfasst und wobei die Aufweckschaltung (2G) einen geringeren Energieverbrauch als das Haupt-Funkmodul hat (2F).

Die Erfindung schafft ferner einen Datenträger, der ein derartiges Computerprogramm speichert.

Des Weiteren werden Ausführungsformen des erfindungsgemäßen Verfahrens des erfindungsgemäßen Netzwerkknotens und eines drahtlosen Netzwerkes gemäß der Erfindung unter Bezugnahme auf die beigefügten Figuren detailliert beschrieben.

Es zeigen:

Fig. 1 ein aus Sensor-Netzwerkknoten bestehendes drahtloses Netzwerk als Ausführungsbeispiel eines erfindungsgemäßen drahtlosen Netzwerkes, in dem das erfindungsgemäße Verfahren zum Aktivieren von Netzwerkknoten eingesetzt wird;

Fig. 2 ein Diagramm zur Darstellung der Kommunikation zwischen zwei Sensor-Netzwerkknoten des in Fig. 1 dargestellten Sensor-Netzwerkknotennetzwerkes, bei dem ein Netzwerkknoten durch einen anderen Netzwerkknoten aus einem Schlafbetriebsmodus aufgeweckt wird;

Fig. 3 ein Blockschaltbild einer möglichen Ausführungsform eines Netzwerkknotens gemäß der Erfindung;

Fig. 4 ein Ablaufdiagramm zur Darstellung eines Ausführungsbeispiels des erfindungsgemäßen Verfahrens zum Aktivieren eines Netzwerkknotens;

Fig. 5 ein Signaldiagramm zur Darstellung eines Ausführungsbeispiels des erfindungsgemäßen Verfahrens;

Fig. 6 ein weiteres Signaldiagramm zur Darstellung eines Ausführungsbeispiels des erfindungsgemäßen Verfahrens;

Fig. 7 ein Signaldiagramm zur Darstellung eines weiteren Ausführungsbeispiels des erfindungsgemäßen Verfahrens;

Fig. 8 ein Signaldiagramm zur Darstellung eines weiteren Ausführungsbeispiels des erfindungsgemäßen Verfahrens;

Fig. 9 ein Signaldiagramm zur Darstellung eines weiteren Ausführungsbeispiels des erfindungsgemäßen Verfahrens;

Fig. 10 ein Signaldiagramm zur Darstellung eines weiteren Ausführungsbeispiels des erfindungsgemäßen Verfahrens;

Fig. 11 ein Signaldiagramm zur Darstellung eines weiteren Ausführungsbeispiels des erfindungsgemäßen Verfahrens.

Im Weiteren werden Ausführungsformen des erfindungsgemäßen Verfahrens zum Aktivieren eines Netzwerkknotens innerhalb eines drahtlosen Netzwerkes und eines Netzwerkknotens gemäß der Erfindung unter Bezugnahme auf die beigefügten Figuren beschrieben.

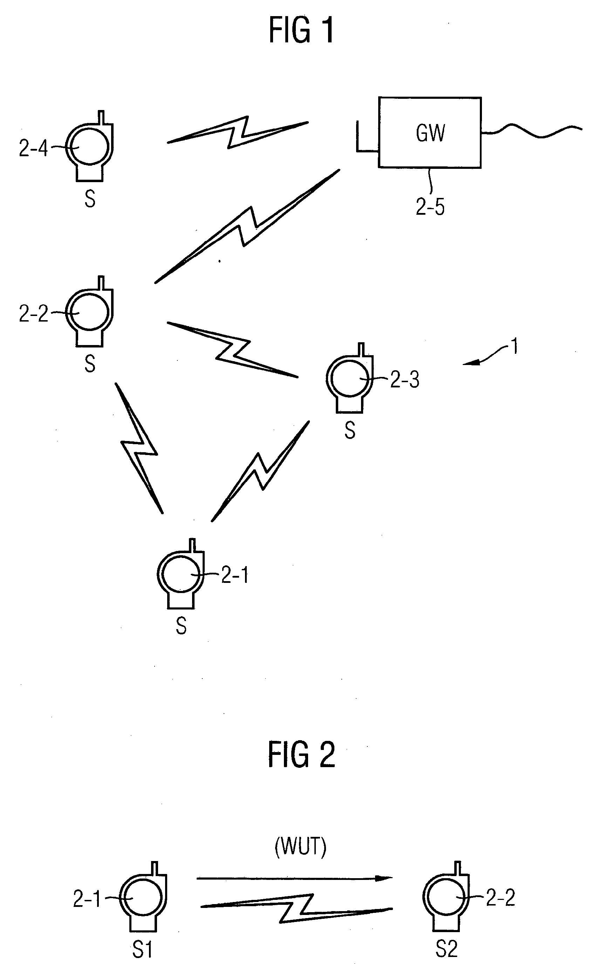

Wie man aus Fig. 1 erkennen kann, besteht bei dem dargestellten Ausführungsbeispiel ein drahtloses Netzwerk 1 aus mehreren Netzwerkknoten 2, wobei ein Teil der Knoten, d.h., die Knoten 2-1 bis 2-4 Sensor-Netzwerkknoten sind und der Knoten 2-5 ein Gateway-Knoten ist, der das Sensornetzwerk 1 mit einem Infrastrukturnetzwerk, beispielsweise dem Internet verbindet. Der Gateway-Knoten 2-5 kann einen zentralen Sicherheits-Management-Knoten bilden oder mit einem separaten Sicherheits-Management-Knoten verbunden sein. In einer Variante kann der Sicherheits-Management-Knoten durch einen Sensor-Netzwerkknoten S gebildet sein.

Bei den Netzwerkknoten 2 des erfindungsgemäßen Netzwerkes 1 kann es sich um mobile Netzwerkknoten aber auch um feste Netzwerkknoten handeln.

Die Netzwerkknoten 2 des Netzwerkes 1 kommunizieren miteinander über eine drahtlose Funkschnittstelle. Die Netzwerkknoten 2 sind zwischen verschiedenen Betriebsmodi umschaltbar. Bei einer möglichen Ausführungsform des erfindungsgemäßen Netzwerkes weisen die Netzwerkknoten 2 zwei Betriebsmodi auf, nämlich einen Schlafbetriebsmodus und einen normalen Arbeitsbetriebsmodus. Im Schlafbetriebsmodus verbraucht der jeweilige Netzwerkknoten 2 wenig Energie, damit seine Lebens- beziehungsweise Betriebszeit aufgrund einer möglichen beschränkten Batterieversorgung möglichst lange ist. In dem normalen Arbeitsbetriebsmodus ist der jeweilige Netzwerkknoten 2 voll funktionsfähig und kann beispielsweise erfasste Sensordaten an den Gateway-Knoten 2-5 und von dort an eine Datenverarbeitungseinheit übermitteln.

Fig. 2 verdeutlicht das Aufwecken eines Netzwerkknotens innerhalb des drahtlosen Netzwerkes 1 durch einen anderen Netzwerkknoten. Bei dem dargestellten Beispiel wird ein Netzwerkknoten 2-2 durch einen anderen Netzwerkknoten 2-1 aufgeweckt, das heißt der Netzwerkknoten 2-2 wird aus einem Schlafbetriebsmodus in einen normalen Betriebsmodus versetzt. Der durch den Netzwerkknoten 2-1 aufzuweckende Netzwerkknoten 2-2 wird auch als Ziel-Netzwerkknoten bezeichnet. Wie in Fig. 2 dargestellt, sendet der Netzwerkknoten 2-1 ein geheimes Aufweck-Token WUT (Wake-Up-Token) an den Ziel-Netzwerkknoten 2-2. Dieses empfangene geheime Aufweck-Token WUT wird innerhalb des empfangenen Ziel-Netzwerkknoten 2-2 mittels einer vorgegebenen Prüffunktion und mittels mindestens eines gespeicherten Aufweck-Token-Referenzwertes WUTRV (Wake-Up-Token-Reference-Value) verifiziert.

Das Wake-Up-Token WUT ist nur legitimen Sende- und Empfangsknoten innerhalb des Netzwerkes 1 bekannt. Der empfangene Ziel-Netzwerkknoten prüft das Wake-Up-Token WUT mittels eines Wake-Up-Token-Referenzwertes WUTRV. Wird das Wake-Up-Token WUT von dem Ziel-Netzwerkknoten 2-2 über sein Wake-Up-Radio-Modul von dem anderen Netzwerkknoten 2-1 empfangen, wird der Ziel-Netzwerkknoten 2-2 aus einem Schlafbetriebsmodus (Deep Sleep Mode) aufgeweckt. Die Kenntnis eines Wake-Up-Tokens WUT autorisiert somit einen Netzwerkknoten 2-i des Netzwerkes 1 dazu einen anderen Netzwerkknoten 2-j innerhalb des Netzwerkes 1 aufzuwecken beziehungsweise zu aktivieren.

Spätestens wenn ein Netzwerkknoten 2 innerhalb des Netzwerkes aufgrund einer beliebigen Bedingung von seinem aktiven normalen Betriebsmodus in den Schlafbetriebsmodus wechselt, stellt er vor dem Umschalten beziehungsweise dem Betriebsmoduswechsel einer anderen Komponente beziehungsweise einem anderem Netzwerkknoten innerhalb des Netzwerkes 1 einen oder mehrere Aufweck-Token WUT zur Verfügung, wobei eine Prüfinformation beziehungsweise ein Wake-Up-Token-Referenzwert WURTV zur Überprüfung eines empfangenen Wake-Up-Tokens WUT in einem Speicher für den späteren Aufweckvorgang hinterlegt wird.

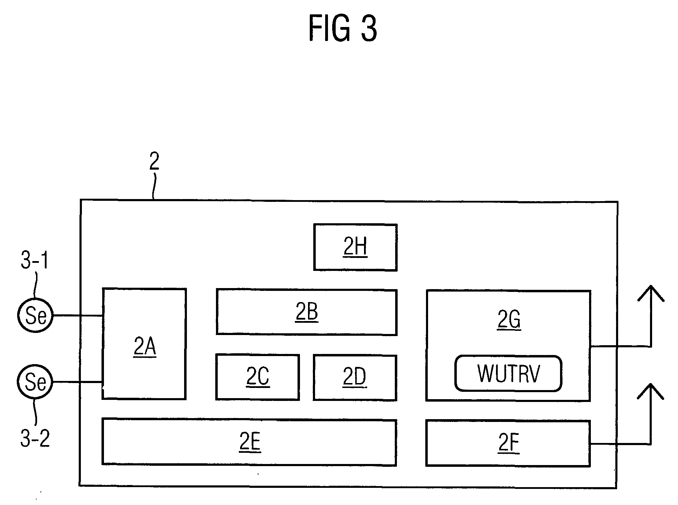

Fig. 3 zeigt ein Blockdiagramm eines Ausführungsbeispiels eines erfindungsgemäßen Netzwerkknotens 2 innerhalb des drahtlosen Netzwerkes 1. Bei dem in Fig. 3 dargestellten Ausführungsbeispiel handelt es sich um einen Sensor-Netzwerkknoten, der über eine Input-/Outputeinheit 2A beziehungsweise über eine Schnittstelle mit einem oder mehreren Sensoren 3, 3-1, 3-2 verbunden ist. Die Sensoren 3-1, 3-2 können innerhalb des Sensor-Netzwerkknotens 2 enthalten beziehungsweise darin integriert sein oder drahtlos beziehungsweise drahtverbunden mit der Schnittstelle 2A verbunden sein. Bei den Sensoren kann es sich beispielsweise um einen Temperatursensor, einen Feuchtigkeitssensor oder einen Helligkeitssensor handeln. Der Netzwerkknoten 2, wie er in Fig. 3 dargestellt ist, verfügt über eine Datenverarbeitungseinheit beziehungsweise CPU 2B, die bei der dargestellten Ausführungsform Zugriff auf einen Flash-Datenspeicher 2C und einen RAM-Speicher 2D hat. In dem RAM-Speicher 2D können beispielsweise Sensordaten, die von den Sensoren 3-1, 3-2 geliefert werden, zwischengespeichert werden. Weiterhin kann der Sensor-Netzwerkknoten 2 eine Signalverarbeitungseinheit 2E aufweisen. Wie in Fig. 3 dargestellt, verfügt der Netzwerkknoten 2 zudem über eine Sende- und Empfangseinheit beziehungsweise ein Haupt-Funkmodul 2F sowie über eine integrierte Aufweckschaltung 2G, die den Netzwerkknoten 2 nach Empfangen eines geheimen Aufweck-Tokens WUT, welches über das mittels einer vorgegebenen Prüffunktion und eines gespeicherten Aufweck-Token-Referenzwertes WUTRV verifiziert wird, aus einem Schlafbetriebsmodus in einen normalen Arbeitsbetriebsmodus versetzt beziehungsweise schaltet.

Bei einer möglichen Ausführungsform weist die integrierte Aufweckschaltung 2G einen internen Speicher beziehungsweise ein Datenregister auf, in dem der Aufweck-Token-Referenzwert WUTRV gespeichert ist. Die Verifizierung mittels der Prüffunktion erfolgt durch die integrierte Aufweckschaltung 2G des Sensor-Netzwerkknotens 2. Die Funktionen des normalen Arbeitsbetriebsmodus werden in der Regel durch die CPU 2B des Netzwerkknoten 2 ausgeführt. Im Gegensatz zu der CPU 2B und dem Sende- und Empfangsmodul beziehungsweise dem Haupt-Funkmodul 2F zeichnet sich die integrierte Aufweckschaltung 2G des Netzwerkknoten 2 durch einen geringen Energieverbrauch aus. Bei einer möglichen Ausführungsform erfolgt die Stromversorgung des Netzwerkknoten 2 durch eine darin vorgesehene Batterie 2H. Viele verschiedene Ausführungsvarianten eines erfindungsgemäßen Netzwerkknotens 2 sind möglich. Bei dem in Fig. 3 dargestellten Ausführungsbeispiel handelt es sich um einen Sensor-Netzwerkknoten für ein Sensornetzwerk.

Bei einer alternativen Ausführungsform handelt es sich bei dem Netzwerkknoten 2 auch um ein tragbares Telekommunikationsgerät, beispielsweise um ein mobiles Telefon, einen Laptop oder einen PDA.

Weiterhin ist es möglich, dass der Netzwerkknoten 2 neben Sensoren, wie sie in Fig. 3 dargestellt sind, auch über Aktoren verfügt, die durch den Netzwerkknoten 2 angesteuert werden. Durch einen Aktor kann beispielsweise ein Ventil geöffnet oder verschlossen werden. Bei dem Netzwerkknoten 2 handelt es sich in der Regel um einen mobilen Netzwerkknoten, der beispielsweise mittels Batterie betrieben wird. Es ist aber auch möglich, dass der Netzwerkknoten 2 an einem festen Standort montiert oder abgelegt ist und in anderer Weise durch Strom versorgt wird, beispielsweise durch eine Solarzelle oder dergleichen.

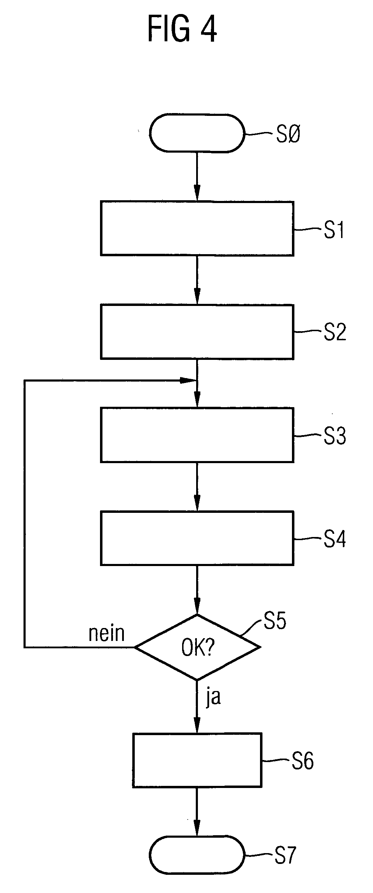

Fig. 4 zeigt ein Ablaufdiagramm zur Darstellung eines Ausführungsbeispiels des erfindungsgemäßen Verfahrens zum Aktivieren eines aufzuweckenden Ziel-Netzwerkknoten 2 innerhalb eines drahtlosen Netzwerkes 1.

Nach einem Startschritt S0 empfängt der aufzuweckende Netzwerkknoten 2 zunächst in einem Schritt S1 einen durch eine andere Komponente bzw. Knoten generierten Wake-Up-Token-Referenzwert WUTRV und speichert diesen Wert in einem Schritt S2 in einem Datenspeicher ab, beispielsweise in einem Datenregister der in Fig. 3 dargestellten Aufweckschaltung 2G. Nach dem Abspeichern des Aufweck-Token-Referenzwertes WUTRV im Schritt S2 kann der Netzwerkknoten 2 in den energiesparenden Schlafbetriebsmodus wechseln.

Sobald der Ziel-Netzwerkknoten 2 im Schritt S3 über die integrierte Aufweckschaltung 2G ein Aufweck-Token WUT empfängt, prüft er dieses empfangene Aufweck-Token WUT im Schritt S4 mittels einer vorgegebenen Prüffunktion und mittels des im Schritt S2 gespeicherten Aufweck-Token-Referenzwertes WUTRV. Falls im Schritt S5 das empfangene Aufweck-Token WUT durch die integrierte Aufweck-Schaltung 2G verifiziert wird, erzeugt diese ein Aufwecksignal im Schritt S6, welches die übrigen Komponenten beziehungsweise Schaltungen des Netzwerkknotens 2 aus dem Schlafbetriebsmodus wecken beziehungsweise von dem Schlafbetriebsmodus in einen normalen Arbeitsbetriebsmodus versetzen. So wird beispielsweise durch das im Schritt S6 generierte Aufwecksignal die in Fig. 3 dargestellte CPU 2B und das Haupt-Funkmodul 2F zum Senden und Empfangen von Nachrichten aktiviert. Nach der Aktivierung des Netzwerkknotens 2 endet der in Fig. 4 dargestellte Aufweckvorgang im Schritt S7.

Die Verifizierung eines empfangenen Aufweck-Tokens WUT kann wie folgt erfolgen:

IF Prüffunktion (WUTRV, WUT) Returns TRUE
THEN WAKE UP.

Bei einer Ausführungsvariante wird das geheime Aufweck-Token WUT und der Aufweck-Token-Referenzwert WUTRV durch den aufzuweckenden Ziel-Netzwerkknoten selbst generiert. In diesem Falle kann der Netzwerkknoten das gebildete Aufweck-Token vor seinem Wechsel in den Schlafbetriebsmodus an einen anderen Netzwerkknoten des Netzwerkes 1 übertragen, welcher das erhaltene Aufweck-Token WUT zur späteren Aktivierung des Ziel-Netzwerkknotens speichert.

Bei einer alternativen Ausführungsform des erfindungsgemäßen Verfahrens wird das Aufweck-Token WUT und der Aufweck-Token-Referenzwert WUTRV durch einen anderen Netzwerkknoten des Netzwerkes 1 generiert. Bei dieser Ausführungsvariante wird der Aufweck-Token-Referenzwert WUTRV vor einem Wechsel des Ziel-Netzwerkknotens 2 in den Schlafbetriebsmodus an diesen Ziel-Netzwerkknoten übertragen und dort zur späteren Aktivierung des Ziel-Netzwerkknotens beispielsweise in einem Datenregister der darin integrierten Aufweckschaltung 2G gespeichert.

Bei einer Ausführungsvariante wird zu einem Aufweck-Token ein zugehöriger Aufweck-Token-Referenzwert WUTRV durch einen zentralen Sicherheits-Management-Knoten generiert, beispielsweise wie bei dem in Fig. 1 dargestellten Beispiel, durch einen Gateway-Knoten 2-5. Der generierte Aufweck-Token-Referenzwert WUTRV wird anschließend von dem zentralen Sicherheits-Managment-Knoten 2-5 zu dem Ziel-Netzwerkknoten 2-i übertragen und vor einem Wechsel des Ziel-Netzwerkknotens in den Schlafbetriebsmodus in diesem Ziel-Netzwerkknoten 2-i für den späteren Aufweckvorgang gespeichert. Das durch den zentralen Sicherheits-Management-Knoten 2-5 generierte Aufweck-Token kann dann einem anderen Netzwerkknoten innerhalb des Netzwerkes 1 zum Aktivieren des Ziel-Netzwerkknotens bereitgestellt werden.

Auf diese Weise kann ein Netzwerkknoten 2, der den schlafenden Ziel-Netzwerkknoten aufwecken möchte, von dem zentralen Sicherheits-Management-Knoten 2-5 direkt das dafür nötige Wake-Up-Token WUT anfordern.

Bei einer möglichen Ausführungsvariante stellt der Sicherheits-Management-Knoten 2-5 dem anfragenden Knoten 2 das angeforderte Aufweck-Token WUT nur nach einer entsprechenden Berechtigungsprüfung bereit.

Bei einer möglichen Ausführungsform des erfindungsgemäßen Verfahrens wird der Aufweck-Token-Referenzwert WUTRV und das Aufweck-Token WUT getrennt durch verschiedene Netzwerkknoten 2 des drahtlosen Netzwerkes 1 auf Basis eines gemeinsamen geheimen Schlüssels K generiert. Beispielsweise kann der Aufweck-Token-Referenzwert WUTRV durch den aufzuweckenden Ziel-Netzwerkknoten und das Aufweck-Token WUT durch einen anderen Netzwerkknoten, der den Ziel-Netzwerkknoten aufwecken möchte auf Basis eines gemeinsamen geheimen Schlüssels K generiert werden.

Bei einer möglichen Ausführungsform können dabei der Aufweck-Token-Referenzwert WUTRV und das Aufweck-Token WUT mittels einer Schlüsselableitungsfunktion KDF (Key Derivation Function) aus dem Schlüssel K gebildet.

$$WUT \; = \; KDF(K)$$

Bei einer möglichen Ausführungsvariante ist die eingesetzte Schlüsselableitungsfunktion KDF eine Hash-Funktion.

Bei einer möglichen Ausführungsform wird ein ohnehin für einen anderen Zweck vorhandener kryptographischer Schlüssel K eingesetzt. Beispielsweise kann ein netzwerkweit bekannter Schlüssel, ein sogenannter Network Key, eingesetzt werden.

Als Schlüsselableitungsfunktion KDF kann beispielsweise eine Key-Hash-Function wie etwa HMAC-SHA1, die zusätzlich eine feste Zeichenkette als Eingabeparameter verwenden, benutzt werden.

Bei einer möglichen Ausführungsform des erfindungsgemäßen Verfahrens wird das Aufweck-Token WUT und der Aufweck-Token-Referenzwert WUTRV von einer zusammensetzbaren Zeichenkette abgeleitet. Diese zusammensetzbare Zeichenkette kann aus einer oder mehreren Zeichenfolgen zusammengesetzt werden. Diese zusammensetzbaren Zeichenfolgen können verschiedene Informationen kodieren.

Bei einer möglichen Ausführungsform weist die zusammensetzbare Zeichenfolge einen Identifikationscode IC auf, der zur Identifizierung desjenigen Netzwerkknotens 2 innerhalb des Netzwerkes 1 dient, welcher das Aufweck-Token WUT an den Ziel-Netzwerkknoten zu dessen Aktivierung aussendet. Auf diese Weise enthält das Aufweck-Token WUT eine Information über den Sendeknoten. Zum Empfangen eines derartigen Aufweck-Token WUT durch die integrierte Aufweckschaltung 2G des aufzuweckenden Netzwerkknotens 2 kann der Netzwerkknoten 2 direkt nach seinem Aufwachen beziehungsweise nach dem Schalten in den normalen Betriebsmodus die Identität desjenigen Netzwerkknotens feststellen, der ihn aufgeweckt hat. Auf diese Weise kann der aufgeweckte Netzwerkknoten 2 beziehungsweise der Zielnetzwerkknoten unter anderem entscheiden, von welchem Netzwerkknoten er nachfolgend empfangene Nachrichten annimmt. Darüber hinaus ermöglicht das Vorsehen eines Identifikationscodes IC gewissermaßen einen Rückruf in dem der aufgeweckte Netzwerkknoten 2 mit dem aufweckenden Netzwerkknoten Kontakt aufnimmt.

Bei einer weiteren Ausführungsvariante weist die zusammensetzbare Zeichenfolge der Zeichenkette, aus welcher das Aufweck-Token und der Aufweck-Token-Referenzwert ableitbar sind, einen sogenannten Reason-Code RC auf, welcher einen Grund für die Aktivierung des Ziel-Netzwerkknotens 2 angibt. Der Reason Code beziehungsweise Begründungscode RC gibt dabei an, warum der Netzwerk-Knoten 2 geweckt werden soll. Mögliche Gründe für das Wecken eines Netzwerkknoten 2 können beispielsweise die Weiterleitung von Datenpaketen oder Alarmdatenpaketen oder die notwendigen Ermittlung von Sensorwerten oder die Durchführung von Konfigurationsaufgaben sein. Der Reason Code beziehungsweise Begründungscode RC und das Aufweck-Token WUT können derart konfiguriert sein, dass die integrierte Aufweckschaltung 2G des zu weckenden Netzwerkknotens 2 bereits beim Empfangen jedes einzelnen Bits entscheiden kann, ob der weitere Teil des Wake-Up-Tokens WUT beziehungsweise des Reason-Codes RC für den empfangenden aufzuweckenden Netzwerkknoten 2 relevant ist oder ignoriert werden kann.

Basierend auf dem empfangenen Reason Code RC kann somit die Aufweck-Schaltung beziehungsweise die Wake-Up-Radio-Komponente 2G des empfangenen Ziel-Netzwerkknotens 2 entscheiden, ob der Netzwerkknoten 2 aus dem Schlafbetriebsmodus aufgeweckt wird oder nicht. Die Information, warum der Zielnetzwerkknoten 2 von dem Schlafbetriebsmodus in den normalen Betriebsmodus versetzt wird, steht dem Ziel-Netzwerkknoten 2 direkt nach dem Aufwachen zur Verfügung und kann für die weitere Verarbeitung der Daten berücksichtigt werden.

Weiterhin ist es möglich, dass der aufgeweckte Ziel-Netzwerkknoten 2 der Wake-Up-Radio-Komponente beziehungsweise der integrierten Aufweckschaltung 2G vor einem Übergang in den Schlafbetriebsmodus mitteilt, dass er nur bei vorgegebenen Reason-Codes RC beziehungsweise Begründungscodes RC zu wecken ist. Dadurch ist unter anderem ein an den aktuellen Energiezustand des Ziel-Netzwerkknotens 2 angepasstes Verhalten des Ziel-Netzwerknotens 2 möglich.

Bei einer weiteren Ausführungsform des erfindungsgemäßen Verfahrens weist eine zusammensetzbare Zeichenfolge eine Zeichenkette auf deren Basis das Aufweck-Token WUT und der Aufweck-Token-Referenzwert WUTRV gebildet werden können, einen Bedingungs-Weckcode beziehungsweise einen Conditional-Wake-Up-Code auf.

Der Bedingungs-Weckcode gibt eine Bedingung für die Aktivierung des Ziel-Netzwerkknotens 2 an. Der Conditional- beziehungsweise Bedingungs-Weckcode kann die integrierte Aufweckschaltung 2G des Ziel-Netzwerkknotens 2 beispielsweise anweisen, eine Messung durch einen Sensor 3 des Ziel-Netzwerkknotens 2 durchführen zu lassen und den Ziel-Netzwerkknoten 2 nur bei Vorliegen beziehungsweise Erfüllung einer bestimmten Bedingung aus dem Schlafbetriebsmodus in den normalen Betriebsmodus zu versetzen. Eine derartige Bedingung kann beispielsweise darin bestehen, dass der von dem Sensor 3 gelieferte Messwert über einem vorgegebenen Schwellenwert liegt. Eine derartige Messung ist mit einem oder einigen Sensoren 3 ohne Beteiligung anderer Komponenten des Ziel-Netzwerknotens 2 möglich, sodass der Ziel-Netzwerkknoten 2 weiterhin im Schlafbetriebsmodus verbleiben kann. Diese Ausführungsvariante bietet den Vorteil, dass bei dem vorgenannten Vorgang die Haupt- und Empfangseinheit beziehungsweise das Haupt-Funkmodul 2F des Ziel-Netzwerkknotens 2 nicht aktiviert werden muss und somit der Stromverbrauch minimal ist. Darüber hinaus liegen nach dem Aufwachen des Ziel-Netzwerknotens 2 bereits Informationen über den Grund des Aufweckens sowie Sensormesswerte vor, sodass eine sofortige Signal- und Datenverarbeitung möglich ist.

Bei einer Ausführungsform wird zum Beispiel ein Sensorwert der von einem Sensor 3-1, 3-2 geliefert wird, über die I/0 Einheit 2A direkt an die Aufweckschaltung 2G übergeben. Bei einer Ausführungsform wird der Sensorwert bzw. ein analoges Messsignal mittels eines Komparators mit einem Referenz- bzw. Vergleichswert verglichen. Dies kann sowohl analog als auch digital erfolgen. Die CPU 2B kann dann in Abhängigkeit von dem Komparatorausgangssignal geweckt werden und mindestens eine vorgegebene Bedingung prüfen. Ist diese Bedingung nicht erfüllt, fällt die CPU 2B in den Schlaf-Betriebsmodus zurück. Ist jedoch die Bedingung erfüllt, wird durch die CPU 2B der gesamte Netzwerkknoten einschließlich des Haupt-Funkmoduls 2F aktiviert.

Bei einer Ausführungsvariante ist in dem Wake-Up-Code beziehungsweise dem Bedingungs-Weckcode eincodiert, welche Bedingungen zu prüfen sind. Alternativ können diese Informationen als zu einem bestimmten Wake-Up-Code zugehörig gespeichert vorliegen.

Weitere Ausführungsvarianten des erfindungsgemäßen Verfahrens sind möglich. Beispielsweise kann die zusammensetzbare Zeichenfolge für eine Zeichenkette, auf deren Basis das Aufweck-Token WUT und der Aufweck-Token-Referenzwert WUTRV abgeleitet werden, eine Knotenadresse des Ziel-Netzwerkknotens 2 oder einen Wake-Up-Code beziehungsweise Weckcode aufweisen. Verglichen mit einem festen Wake-Up-Code bietet dieser Vorgang einen besseren Schutz gegen Angriffe, da ein einmal verwendeter Wake-Up-Code nicht erfolgreich wiedereingespielt werden kann.

Die Verwendung von Reason Codes beziehungsweise Begründungscodes RC und Bedingungsbeziehungsweise Weckcodes beziehungsweise Conditional-Wake-Up-Codes ermöglicht es einem Ziel-Netzwerkknoten 2, nur für ihn relevante Ereignisse und Nachrichten zu bearbeiten. Diese Entscheidung des Ziel-Netzwerkknotens 2 wird getroffen, während sich der Ziel-Netzwerkknoten 2 noch in dem energiesparenden Schlafbetriebsmodus befindet, sodass eine deutlich verlängerte Lebenszeit beziehungsweise Betriebszeit des jeweiligen Ziel-Netzwerkknotens 2 erreicht werden kann.

Durch die Verwendung von Wake-Up-Tokens WUT mit oder ohne Reason Codes oder Bedingungs-Wake-Up-Codes stehen einem Ziel-Netzwerkknoten 2 bereits unmittelbar nach seinem Aufwecken weitere Informationen zur Verfügung, beispielsweise die Identität des aufweckenden Netzwerkknotens, der Grund des Aufweckens oder eine eingetretene Bedingung eines Sensorwertes. Dadurch werden eine schnellere Bearbeitung von Nachrichten und eine schnellere Reaktion auf Ereignisse gewährleistet. Dadurch wird die Datenverarbeitung innerhalb des Netzwerkes 1 insgesamt beschleunigt.

Zur Erhöhung der Sicherheit kann bei einer Ausführungsvariante des erfindungsgemäßen Verfahrens das Aufweck-Token WUT und der Aufweck-Token-Referenzwert WUTRV von einem Knoten 2 erneuert werden.

Bei einer Ausführungsvariante erfolgt eine Erneuerung des Aufweck-Tokens WUT und des zugehörigen Aufweck-Token-Referenzwertes WUTRV bei jedem Aktivierungsvorgang des Ziel-Netzwerkknotens 2.

Bei einer weiteren Ausführungsvariante erfolgt die Erneuerung des Aufweck-Tokens WUT und des Aufweck-Token-Referenzwertes WUTRV nach einer vorbestimmten Anzahl von Aktivierungsvorgängen des Ziel-Netzwerkknotens 2.

Bei einer weiteren Ausführungsvariante erfolgt die Erneuerung des Aufweck-Tokens WUT und des zugehörigen Aufweck-Token-Referenzwertes WUTRV in vorgegebenen Zeitabständen, das heißt periodisch.

Bei einer Ausführungsvariante des erfindungsgemäßen Verfahrens werden der Aufweck-Token-Referenzwert WUTRV und das Aufweck-Token WUT mittels einer Schlüsselableitungsfunktion KDF aus einem geheimen kryptographischen Schlüssel K gebildet. Bei diesem Schlüssel K kann es sich bei einer Ausführungsvariante um einen Netzwerkwert bekannten Netzwerkschlüssel handeln.

Bei einer alternativen Ausführungsform ist der kryptographische Schlüssel K ein Schlüssel, der neben dem aufzuweckenden Ziel-Netzwerkknoten 2 nur einem zweiten Netzwerkknoten bekannt ist, das heißt es besteht bei dieser Ausführungsvariante eine Sicherheitsbeziehung zwischen diesen beiden Netzwerkknoten.

Bei einer weiteren Ausführungsvariante ist der kryptographische Schlüssel K nur einer vorgegebenen Gruppe von Netzwerkknoten bekannt und bildet einen Gruppenschlüssel.

Bei einer Ausführungsform des erfindungsgemäßen Verfahrens ist die Schlüsselableitungsfunktion KDF eine Hash-Funktion.

Bei einer möglichen Ausführungsvariante wird das Aufweck-Token WUT und der gespeicherte Aufweck-Token-Referenzwert WUTRV durch zwei benachbarte Glieder einer aus Hash-Werten bestehenden Hash-Kette gebildet. Dabei wird der Wake-Up-Token-Referenzwert WUTRV und das Wake-Up-Token WUT aus einer Hash-Kette entnommen die sowohl dem Sende- als auch dem Empfangsknoten bekannt ist. Bei dieser Ausführungsvariante wird für die nächste Schlafphase des Ziel-Netzwerkknoten 2 das Wake-Up-Token anhand des nächsten Hash-Wertes innerhalb der Hash-Tabelle bzw. Hash-Kette bestimmt. Durch diese Vorgehensweise wird sichergestellt, dass für jeden Aufweckvorgang ein anderes, nur dem Sende- und Empfangsknoten bekanntes Wake-Up-Token WUT verwendet wird.

Wenn ein Aufweck-Token (Token alt) bereits verwendet wurde, kann es einem Angreifer gegebenenfalls bereits bekannt sein, wenn es bei der Übertragung abgehört wurde. Durch die Verwendung eines anderen nicht identischen Aufweck-Tokens kann ein derartiger Angriff verhindert werden. Bei dieser Ausführungsvariante ist ein neues Aufweck-Token (Token neu), von dem zuvor verwendeten Aufweck-Token WUT (Token alt) unterschiedlich. Ein neues Aufweck-Token $WUT_i$ kann aus einem bereits zuvor verwendeten Token $WUT_{i-1}$ mittels einer umumkehrbaren kryptographischen Hash-Funktion, wie beispielsweise MD5, SHA-1 oder SHA-56 berechnet werden.

$$WUTi = H(WUT_{i-1})$$

Ein außenstehender Dritter beziehungsweise ein Angreifer kann dabei selbst in Kenntnis des bisherigen Tokens $WUT_{i-1}$ nicht mit vertretbarem Rechenaufwand ein passendes neues Token $WUT_i$ ermitteln.

Bei einer möglichen Ausführungsvariante sind sowohl der Sendeknoten als auch der Empfangsknoten beziehungsweise der Ziel-Netzwerkknoten 2 aus einem bekannten Ankerwert-Token (Token Anchor) durch eine Folge von Hash-Werten einer Hash-Kette berechnen:

$$Token1 = H(Token\ Anchor)$$

$$Token2 = H(Token1)...$$

$$Token(n) = H\ (Token(n-1))$$

Die Token beziehungsweise Hash-Werte werden dann durch die Netzwerkknoten 2 rückwärts, beginnend mit dem Token(n) gefolgt vom Token(n-1) und so weiter zur Verifizierung verwendet werden.

Ein Vorteil dieser Ausführungsvariante besteht darin, dass bei Netzwerkknoten -2, die häufig aufgeweckt werden, nicht jedes Mal beziehungsweise bei jedem Aufweckvorgang ein neues Wake-Up-Token WUT beziehungsweise ein neuer Aufweck-Token-Referenzwert WUTRV eingerichtet werden muss. Für diese Ausführungsvariante ist ein einmalig eingerichteter Aufweck-Token-Wert beziehungsweise Aufweck-Token-Referenzwert nämlich ein Ankerwert (Token Anchor) für n-Aufweckoperationen einsetzbar.

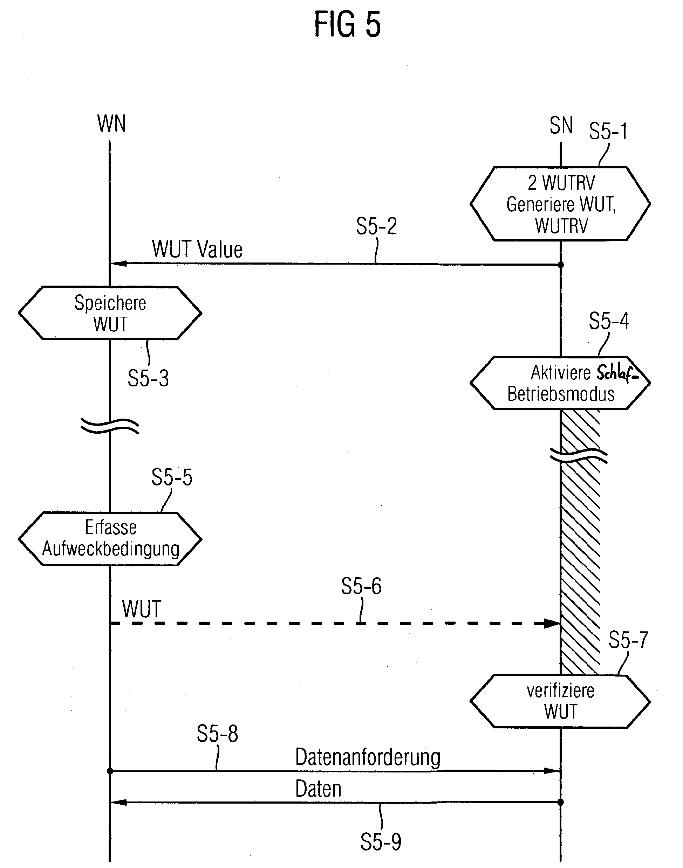

Die Fig. 5 bis Fig. 11 zeigen Signaldiagramme zur Verdeutlichung verschiedener Ausführungsvarianten des erfindungsgemäßen Verfahrens zum Aktivieren eines Ziel-Netzwerkknotens 2.

Fig. 5 zeigt eine Ausführungsvariante bei der ein Aufweck-Token-Referenzwert (WUTRV) durch den aufzuweckenden Ziel-Netzwerkknoten SN selbst erfolgt. Bei der Darstellung gemäß Fig. 5 bezeichnet SN den aufzuweckenden Ziel-Netzwerkknoten (SN: Sleep Node) und WN den aufweckenden Knoten (WN: Wake-Up-Node) der den aufzuweckenden Ziel-Netzwerkknoten SN aufweckt. Die Kommunikation über den regulären Kommunikationskanal, das heißt über das in Fig. 3 dargestellte Haupt-Funkmodul 2F, ist in den nachfolgenden Figuren 5-11 als einfacher Pfeil dargestellt, wohingegen eine Kommunikation über das Wake-Up-Radio beziehungsweise über die integrierte Aufweckschaltung 2G als dicker unterbrochener Pfeil dargestellt ist.

Wie in Fig. 5 dargestellt, erzeugt (S5-1) der aufzuweckende Ziel-Netzwerkknoten SN zunächst selbst das geheime Aufweck-Token WUT und einen zugehörigen Aufweck-Token-Referenzwert WUTRV, wobei der Aufweck-Token-Referenzwert WUTRV in einem Register der integrierten Aufweckschaltung 2G abgespeichert werden kann. Anschließend überträgt (S5-2) der aufzuweckende Ziel-Netzwerkknoten SN das geheime Aufweck-Token WUT für eine spätere Wiedererweckung an einen anderen Netzwerkknoten 2 des Netzwerkes 1, beispielsweise an den in Fig. 5 dargestellten Knoten WN. Dieser Knoten WN kann das empfangene Aufweck-Token WUT in einem Speicher abspeichern (S5-3). Dabei kann das empfangene Aufweck-Token_WUT des Ziel-Netzwerkknotens SN zugehörig zu einer Zieladresse des Ziel-Netzwerkknotens SN abgespeichert werden.

Sobald der Ziel-Netzwerkknoten SN das Aufweck-Token WUT an mindestens einen anderen Netzwerkknoten innerhalb des Netzwerkes 1 übermittelt hat, kann er in den Schlafbetriebsmodus wechseln (S5-4), wie in Fig. 5 dargestellt.

Erfasst der andere Netzwerkknoten WN die Erfüllung einer Aufweckbedingung für den Ziel-Netzwerkknoten SN (S5-5), überträgt (S5-6) er das gespeicherte Aufweck-Token WUT zu dem Wake-Up-Radio beziehungsweise der integrierten Aufweck-Schaltung 2G des Ziel-Netzwerkknotens SN. Die integrierte Aufweck-Schaltung 2G des Ziel-Netzwerkknotens SN führt eine Überprüfung des empfangenen Aufweck-Tokens WUT durch (S5-7). Dabei wird das empfangene geheime Aufweck-Token WUT mittels einer vorgegebenen Prüffunktion und mittels mindestens eines gespeicherten Aufweck-Token-Referenzwertes WUTRV verifiziert. Ist bei dem in Fig. 5 dargestellten Beispiel die Verifizierung des empfangenen Wake-Up-Token WUT erfolgreich, wird der Ziel-Netzwerkknoten SN aus dem Schlafbetriebsmodus in einen normalen Arbeitsbetriebsmodus versetzt. Bei dem dargestellten Beispiel fordert der Weckknoten WN, welcher den Ziel-Netzwerkknoten SN aufgeweckt hat, nach einer bestimmten Zeit Daten an (S5-8), beispielsweise Sensordaten. Diese werden durch den aufgeweckten Ziel-Netzwerkknoten SN, beispielsweise einem Sensor-Netzwerkknoten, bereitgestellt (S5-9). Beispielsweise überträgt der Ziel-Netzwerkknoten SN Sensordaten über den regulären Kommunikationskanal an den Weckknoten WN.

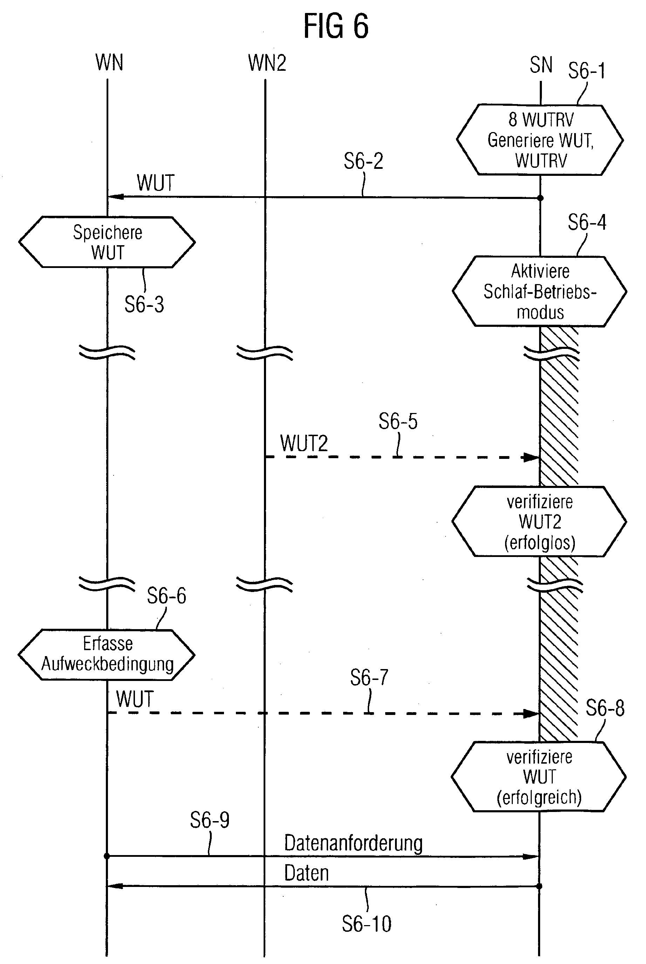

Fig. 6 stellt eine Ausführungsvariante dar, bei der zunächst ein anderer Netzwerkknoten WN2 ein anderes beziehungsweise fehlerhaftes Wake-Up-Token WUT2 sendet (S6-5). In diesem Fall bleibt der Ziel-Netzwerkknoten SN zunächst im Schlafbetriebsmodus. Erst wenn der Knoten WN, welcher über das korrekte Aufweck-Token WUT verfügt, dieses Aufweck-Token an den Ziel-Netzwerkknoten SN überträgt (S6-7), wird der Ziel-Netzwerkknoten SN, wie in Fig. 6 dargestellt, aus dem Schlafbetriebsmodus aufgeweckt (S6-8) und kann die Daten an den aufweckenden Knoten WN bei entsprechender Anforderung (S6-9) übertragen (S6-10).

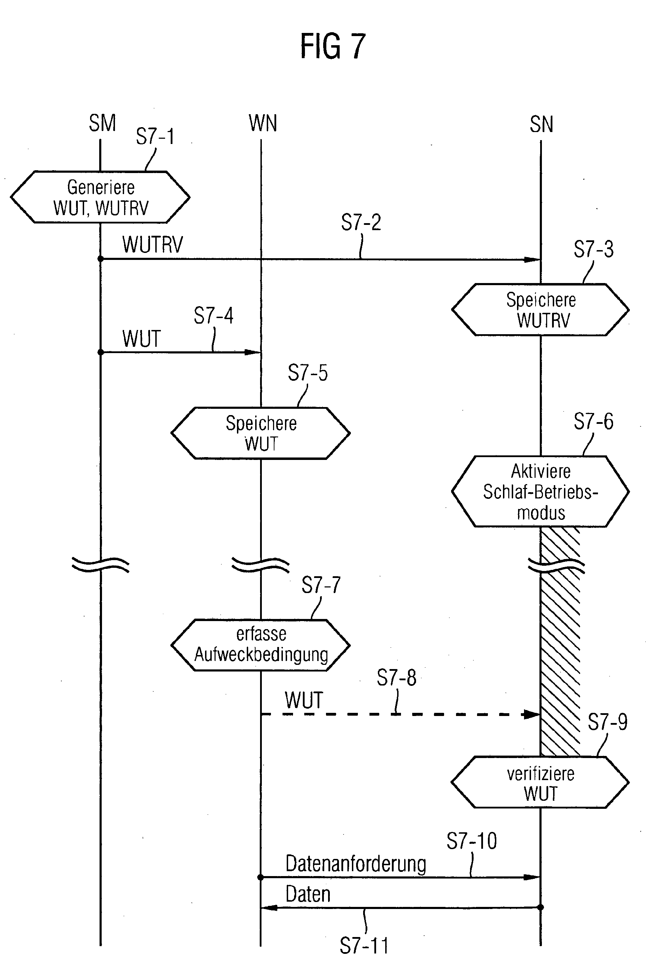

Fig. 7 zeigt eine Ausführungsvariante bei der Aufweck-Token-Referenzwert WUTRV durch einen lokalen Sicherheits-Management-Knoten beziehungsweise einen Sicherheits-Management-Knoten SM eingerichtet wird. Der Sicherheits-Management-Knoten SM generiert (S7-1) sowohl das Aufweck-Token WUT als auch den zugehörigen Aufweck-Token-Referenzwert WUTRV, wobei er den Aufweck-Token-Referenzwert WUTRV dem Ziel-Netzwerkknoten SN zur Verfügung stellt (S7-2), der dieses speichert (S7-3) und das zugehörige Aufweck-Token WUT einem anderen Netzwerkknoten WN auf Vorrat zur Verfügung stellt (S7-1), der dieses speichert (S7-5). Der Ziel-Netzwerkknoten SN wechselt (S7-6) durch in den Schlafbetriebsmodus. Sobald der Netzwerkknoten WN das Eintreten einer Weckbedingung erfasst (S7-7), überträgt er (S7-8) bei dem dargestellten Beispiel das Aufweck-Token WUT zu dem Wake-Up-Radio des Ziel-Netzwerkknotens SN, der dieses als korrekt verifiziert (S7-9). Anschließend kann die Übertragung der Daten nach Anforderung (S7-10) von dem Ziel-Netzwerkknoten SN zu dem aufweckenden Knoten WN erfolgen (S7-11).

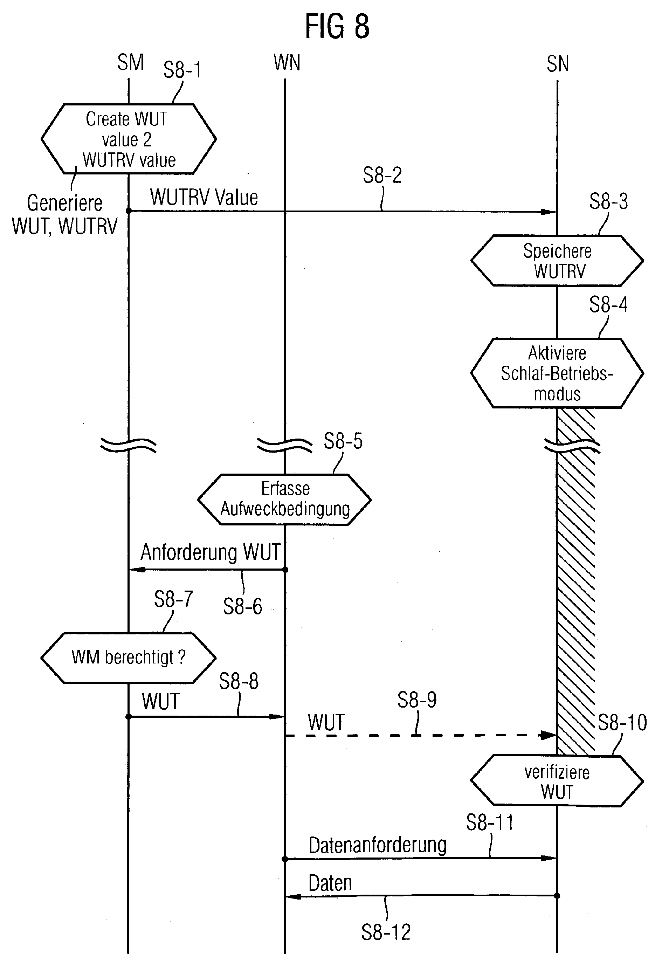

Fig. 8 zeigt eine weitere Ausführungsvariante des erfindungsgemäßen Verfahrens bei dem ebenfalls das Einrichten des Aufweck-Token-Referenzwertes WUTRV durch einen Sicherheits-Management-Knoten SM erfolgt, wobei jedoch das Aufweck-Token WUT von einem Netzwerkknoten WN des Netzwerkes 1 lediglich auf Anforderung beziehungsweise bei Bedarf diesem Knoten WN zur Verfügung gestellt wird. Wenn bei dem in Fig. 8 dargestellten Ausführungsbeispiel ein Netzwerkknoten WN das Eintreten einer Aufweck-Bedingung für den Ziel-Netzwerkknoten SN feststellt (S8-5), frägt er (S8-6) bei dem Sicherheits-Management-Knoten SM nach, ob er ein passendes Aufweck-Token WUT für den Ziel-Netzwerkknoten SN erhalten kann. Der Sicherheits-Management-Knoten SM überprüft (S8-7) bei dem in Fig. 8 dargestellten Ausführungsbeispiel, ob der anfragende Netzwerkknoten WN berechtigt ist den Ziel-Netzwerkknoten SN aufzuwecken oder nicht. In dem dargestellten Beispiel ist der anfragende Netzwerkknoten WN berechtigt den Ziel-Netzwerkknoten SN aufzuwecken und erhält (S8-8) das dafür benötigte Aufweck-Token WUT. Dieses erhaltene Aufweck-Token WUT überträgt (S8-9) der Netzwerkknoten WN an die integrierte Aufweckschaltung 2G des Ziel-Netzwerkknotens SN, welche dieses Aufweck-Token WUT überprüft (S8-10). Bei dem dargestellten Beispiel ist die Verifizierung des empfangenen Aufweck-Token WUT erfolgreich und der Ziel-Netzwerkknoten SN kann die von dem Knoten WN angefragten (S8-11) Daten liefern (S8-12).

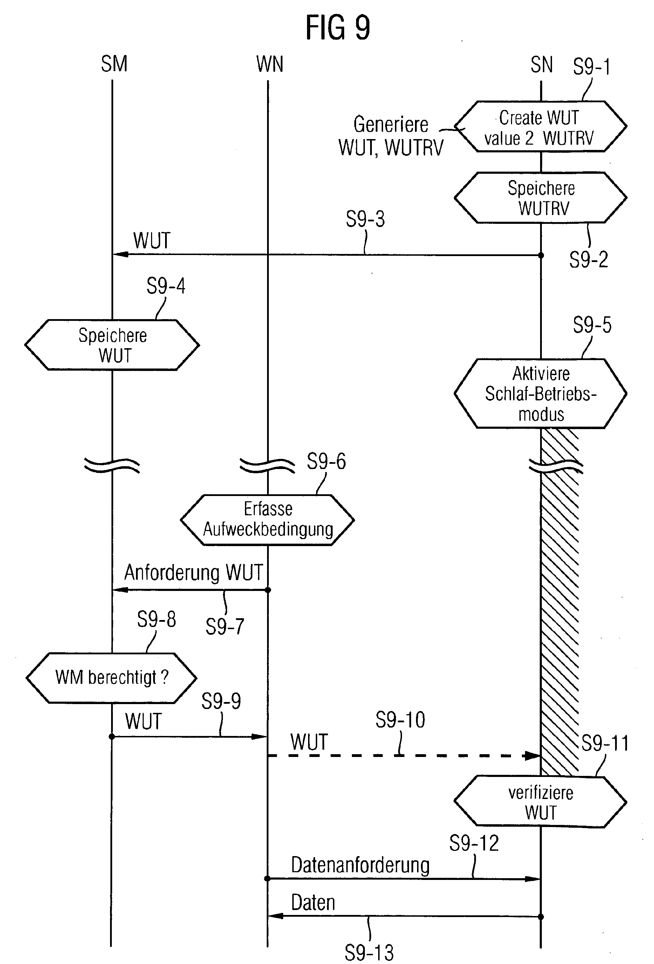

Fig. 9 stellt eine weitere Ausführungsvariante dar, bei der ein von dem Ziel-Netzwerkknoten SN erzeugtes Aufweck-Token WUT bei einem zentralen Sicherheits-Management-Knoten SM registriert wird. Falls ein Netzwerkknoten WN nach Erfassung (S9-6) einer Aufweck-Bedingung für einen Ziel-Netzwerkknoten SN ein geeignetes Aufweck-Token WUT benötigt, erhält er (S9-9) auf Anfrage (S9-7) das bei dem Sicherheits-Knoten SM registrierte Aufweck-Token WUT, sofern der anfragende Netzwerkknoten WN nach Prüfung (S9-8) berechtigt gilt, den Ziel-Netzwerkknoten SN aufzuwecken.

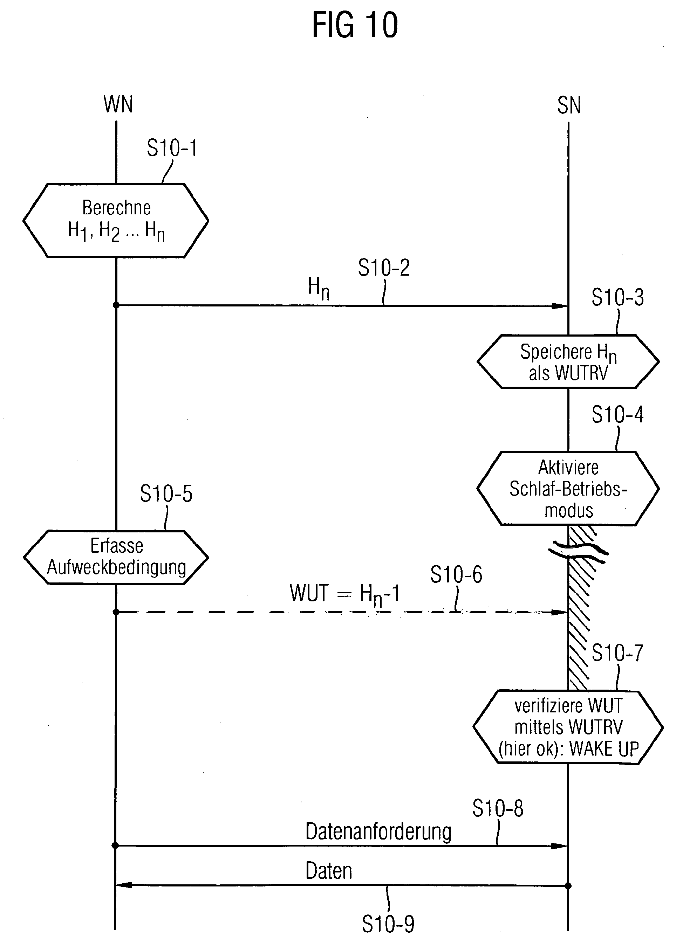

Fig. 10 zeigt eine weitere Ausführungsvariante des erfindungsgemäßen Verfahrens bei der das generierte Aufweck-Token WUT aus einem errechneten Hash-Wert einer Hash-Kette besteht. Ein Knoten WN des Netzwerkes 1 berechnet (S10-1) mehrere Hash-Werte $H_i$ einer Hash-Kette, beispielsweise basierend auf einem Ankerwert. Ein Hash-Wert Hn der Hash-Kette wird als Wake-Up-Token WUT an den Ziel-Netzwerkknoten SN übertragen (S10-2) und mittels eines benachbarten Hash-Wertes der Hash-Kette, nämlich dem Hash-Wert $H_{n-1}$ verifiziert (S10-7). Ist die Verifizierung erfolgreich, wechselt der Ziel-Netzwerkknoten SN von dem Schlafbetriebsmodus in den normalen Betriebsmodus und überträgt (S10-9) die angeforderten (S10-8) Daten an den Netzwerkknoten WN.

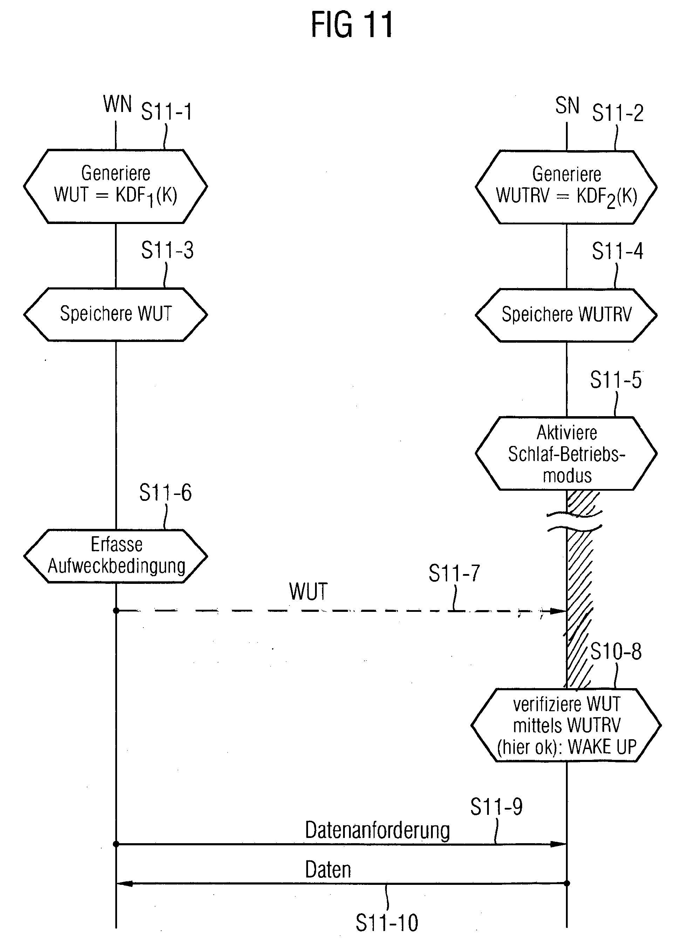

Fig. 11 zeigte eine weitere Ausführungsvariante bei der das Aufweck-Token WUT und der zugehörige Aufweck-Token WUTRV getrennt durch einen Netzwerkknoten WN des Netzwerkes 1 und durch den Ziel-Netzwerkknoten SN, von einem kryptographischen Schlüssel K abgeleitet (S11-1, S11-2) und gespeichert (S11-3, S11-4) werden. Die beiden Knoten WN, SN können dabei dieselbe oder auch unterschiedle Schlüsselableitungsfunktionen KDF verwenden. Nach Erfassung (S11-6) einer Weckbedingung durch den Knoten WN (S11-6) wird der im Schritt S11-5 in den Schlafbetriebsmodus versetzte Zielknoten SN nach Verifizierung (S11-8) des übertragenen(S11-7) WUT aktiviert und stellt die angeforderten (S11-9) Daten zur Verfügung (S11-10).

Durch die Verwendung eines geheimen, vorzugsweise wechselnden, Wake-Up-Tokens WUT wird bei dem erfindungsgemäßen Verfahren ein Sleep Deprivation Angriff, bei dem ein Angreifer den Netzwerkknoten 2 ständig weckt, um diesen Netzwerkknoten 2 daran zu hindern in einem energiesparenden Schlafbetriebsmodus zu verbleiben, verhindert.

Das erfindungsgemäße Verfahren verhindert somit, dass die Lebenszeit beziehungsweise Betriebszeit der Netzwerkknoten 2 durch Sleep Deprivation Angriffe verkürzt wird. Durch Sleep Deprivation Angriffe kann die Betriebszeit eines Sensor-Netzwerkknotens beziehungsweise eines Netzwerkknotens 2 eines drahtloses Netzwerkes 1 von einigen Jahren auf einige Stunden reduziert werden. Die ungewollte Reduzierung der Lebenszeit wird durch die erfindungsgemäße Vorgehensweise verhindert.

**Patentansprüche**

1. Verfahren zum Aktivieren eines aufzuweckenden Ziel-Netzwerkknotens (SN) eines drahtlosen Netzwerkes (1), wobei der Ziel-Netzwerkknoten (SN) aus einem Schlafbetriebsmodus geweckt wird, wenn eine integrierte Aufweckschaltung (2G) des Ziel-Netzwerkknotens (SN) ein geheimes Aufweck-Token (WUT) empfängt und es mittels einer vorgegebenen Prüffunktion und mindestens eines gespeicherten Aufweck-Token-Referenzwertes (WUTRV) verifiziert, wobei das Wecken des Zielnetzwerkknotens (SN) ein Aktivieren eines Haupt-Funkmoduls (2F) zum Senden und Empfangen von Nachrichten umfasst und wobei die Aufweckschaltung (2G) einen geringeren Energieverbrauch als das Haupt-Funkmodul hat (2F).

2. Verfahren nach Anspruch 1, wobei das geheime Aufweck-Token (WUT) und der Aufweck-Token-Referenzwert (WUTRV) durch den Ziel-Netzwerkknoten (SN) selbst generiert werden und vor einem Wechsel des Ziel-Netzwerkknotens (SN) in den Schlafbetriebsmodus an einen anderen Netzwerkknoten (WN, SM) des Netzwerkes (1) übertragen und dort zur späteren Aktivierung des Ziel-Netzwerkknotens (SN) gespeichert werden.

3. Verfahren nach Anspruch 1, wobei das Aufweck-Token (WUT) und der Aufweck-Token-Referenzwert (WUTRV) durch einen anderen Netzwerkknoten (SM, WN) des Netzwerkes (1) generiert werden,
wobei der Aufweck-Token-Referenzwert (WUTRV) vor einem Wechsel des Ziel-Netzwerkknotens (SN) in den Schlafbetriebsmodus an den Ziel-Netzwerkknoten (NWK) übertragen und dort zur späteren Aktivierung des Ziel-Netzwerkknotens (SN) gespeichert wird.

4. Verfahren nach Anspruch 3,
wobei das Aufweck-Token (WUT) und der Aufweck-Token-Referenzwert (WUTRV) durch einen zentralen Sicherheitsmanagementknoten (SM) generiert werden.

5. Verfahren nach Anspruch 4,
wobei der generierte Aufweck-Token-Referenzwert (WUTRV) von dem zentralen Sicherheitsmanagementknoten (SM) zu dem Ziel-Netzwerkknoten (SN) übertragen und vor einem Wechsel des Ziel-Netzwerkknotens (SN) in den Schlafbetriebsmodus in dem Ziel-Netzwerkknoten (SN) gespeichert wird.

6. Verfahren nach Anspruch 5,
wobei das generierte Aufweck-Token (WUT) von dem zentralen Sicherheitsmanagementknoten (SM) einem Netzwerkknoten (WN) zum Aktivieren des Ziel-Netzwerkknotens (SN) bereitgestellt wird.

7. Verfahren nach Anspruch 1,
wobei der Aufweck-Token-Referenzwert (WUTRV) durch den Ziel-Netzwerkknoten (NWK) und das Aufweck-Token (WUT) durch einen anderen Netzwerkknoten (SM, WN) des drahtlosen Netzwerkes (1) auf Basis eines gemeinsamen geheimen Schlüssels (K) generiert wird.

8. Verfahren nach Anspruch 7,
wobei der Aufweck-Token-Referenzwert (WUTRV) und das Aufweck-Token (WUT) mittels einer Schlüsselableitungsfunktion (KDF) aus dem Schlüssel (K) gebildet werden.

9. Verfahren nach Anspruch 8,
wobei die Schlüsselableitungsfunktion (KDF) eine Hash-Funktion ist.

10. Verfahren nach einem der Ansprüche 1-9,
wobei das Aufweck-Token (WUT) und der Aufweck-Token-Referenzwert (WUTRV) nach jedem Aktivierungsvorgang des Ziel-Netzwerkknotens (SN) oder nach einer vorbestimmten Anzahl von Aktivierungsvorgängen des Ziel-Netzwerkknotens (SN) oder in vorgegebenen Zeitabständen erneuert werden.

11. Verfahren nach Anspruch 9,
wobei das Aufweck-Token (WUT) und der gespeicherte Aufweck-Token-Referenzwert (WUTRV) durch zwei benachbarte Glieder einer aus Hash-Werten bestehenden Hash-Kette gebildet werden.

12. Verfahren nach einem der Ansprüche 1-11,
wobei das Aufweck-Token (WUT) und der Aufweck-Token-Referenzwert (WUTRV) von einer Zeichenkette abgeleitet werden.

13. Verfahren nach Anspruch 12,
wobei die Zeichenkette des Aufweck-Tokens (WUT) aus einer oder mehreren Zeichenfolgen zusammengesetzt wird.

14. Verfahren nach Anspruch 13,
wobei die zusammensetzbare Zeichenfolge aufweist:

- einen Identifikationscode (IC) zur Identifizierung desjenigen Netzwerkknotens, welcher das Aufweck-Token (WUT) an den Ziel-Netzwerkknoten (NWK) zu dessen Aktivierung aussendet,
- einen Reason-Code (RC), welcher einen Grund für die Aktivierung des Ziel-Netzwerkknotens (NWK) angibt,
- einen Bedingungs-Weckcode, welcher eine Bedingung für die Aktivierung des Ziel-Netzwerkknotens (NWK) angibt,
- eine Knotenadresse des Ziel-Netzwerkknotens (NWK) oder
- einen vorgegebenen Weckcode.

15. Netzwerkknoten (2) für ein drahtloses Netzwerk (1) mit einer integrierten Aufweckschaltung (2G) zum Versetzen des Netzwerkknotens (2) aus einem Schlafbetriebsmodus in einen normalen Arbeitsbetriebsmodus,
falls die Aufweckschaltung (2G) ein empfangenes geheimes Aufweck-Token (WUT) empfängt und es mittels einer vorgegebenen Prüffunktion und mindestens eines gespeicherten Aufweck-Token-Referenzwertes (WUTRV) verifiziert,
wobei das Versetzen des Netzwerkknotens in den normalen Arbeitsbetriebsmodus (SN) ein Aktivieren eines Haupt-Funkmoduls (2F) zum Senden und Empfangen von Nachrichten umfasst und wobei die Aufweckschaltung (2G) einen geringen Energieverbrauch als das Haupt-Funkmodul hat (2F).

16. Netzwerkknoten nach Anspruch 15,
wobei der Netzwerkknoten (2) einen Speicher zum Speichern des Aufweck-Token-Referenzwertes (WUTRV) aufweist.

17. Netzwerkknoten nach einem der Ansprüche 15 oder 16,
wobei der Netzwerkknoten (2) ein Sensor-Netzwerkknoten mit mindestens einem Sensor (3) ist.

**18.** Netzwerkknoten nach einem der Ansprüche 15 oder 16,
wobei der Netzwerkknoten (2) ein tragbares Telekommunikationsendgerät ist.

**19.** Netzwerkknoten nach Anspruch 18,
wobei das Telekommunikationsendgerät ein mobiles Telefon, ein Laptop oder ein PDA ist.

**20.** Drahtloses Netzwerk (1) mit mehreren Netzwerkknoten (2) nach einem der vorangehenden Ansprüche 15-19.

**21.** Computerprogramm mit Programmbefehlen zur Durchführung des Verfahrens gemäß einem der Ansprüche 1-14, wenn das Computerprogramm ausgeführt wird.

**22.** Datenträger, welcher das Computerprogramm gemäß Anspruch 21 speichert.

**Claims**

**1.** Method for activating a destination network node (SN) to be woken up in a wireless network (1),
the destination network node (SN) being woken up from a sleep operating mode
if an integrated wake-up circuit (2G) of the destination network node (SN) receives a secret wake-up token (WUT) and, by means of a predetermined test function, it verifies at least one stored wake-up token reference value (WUTRV), the waking of the destination network node (SN) comprising an activation of a main radio module (2F) for transmitting and receiving messages and the wake-up circuit (2G) having a lower energy consumption than the main radio module (2F).

**2.** Method according to claim 1,
the secret wake-up token (WUT) and the wake-up token reference value (WUTRV) being generated by the destination network node (SN) itself and, before the destination network node (SN) is changed into the sleep operating mode, being transmitted to a different network node (WN, SM) of the network (1) and stored there for subsequent activation of the destination network node (SN).

**3.** Method according to claim 1,
the wake-up token (WUT) and the wake-up token reference value (WUTRV) being generated by a different network node (SM, WN) of the network (1),
the wake-up token reference value (WUTRV), before the destination network node (SN) is changed into the sleep operating mode, being transmitted to the destination network node (NWK) and being stored there for subsequent activation of the destination network node (SN).

**4.** Method according to claim 3,
the wake-up token (WUT) and the wake-up token reference value (WUTRV) being generated by a central security management node (SM).

**5.** Method according to claim 4,
the generated wake-up token reference value (WUTRV) being transmitted from the central security management node (SM) to the destination network node (SN) and, before the destination network node (SN) is changed into the sleep operating mode, being stored in the destination network node (SN).

**6.** Method according to claim 5,
the generated wake-up token (WUT) being provided by the central security management node (SM) to a network node (WN) for activating the destination network node (SN).

**7.** Method according to claim 1,
the wake-up token reference value (WUTRV) being generated by the destination network node (NWK) and the wake-up token (WUT) being generated by a different network node (SM, WN) of the wireless network (1) based on a common secret key (K).

**8.** Method according to claim 7,
the wake-up token reference value (WUTRV) and the wake-up token (WUT) being formed by means of a key derivation function (KDF) from the key (K).

**9.** Method according to claim 8,
the key derivation function (KDF) being a hash function.

**10.** Method according to one of claims 1-9,
the wake-up token (WUT) and the wake-up token reference value (WUTRV) being renewed after each activation process of the destination network node (SN) or after a predetermined number of activation processes of the destination network node (SN) or at predetermined time intervals.

**11.** Method according to claim 9,
the wake-up token (WUT) and the stored wake-up token reference value (WUTRV) being formed by two adjacent members of a hash chain consisting of hash values.

**12.** Method according to one of claims 1-11,
the wake-up token (WUT) and the wake-up token reference value (WUTRV) being derived from a character string.

**13.** Method according to claim 12,
the character string of the wake-up token (WUT) being assembled from one or more character sequences.

**14.** Method according to claim 13,
the assemblable character sequence comprises:

- an identification code (IC) for identifying the network node which transmits the wake-up token (WUT) to the destination network node (NWK) for the activation thereof,
- a reason code (RC) which provides a reason for the activation of the destination network node (NWK),
- a conditional wake-up code which provides a condition for the activation of the destination network node (NWK),
- a node address of the destination network node (NWK) or
- a predetermined wake-up code.

**15.** Network node (2) for a wireless network (1) comprising an integrated wake-up circuit (2G) for transferring the network node (2) from a sleep operating mode into a normal working operating mode if the wake-up circuit (2G) receives a received secret wake-up token (WUT) and, by means of a predetermined test function, it verifies at least one stored wake-up token reference value (WUTRV),
wherein the transfer of the network node into the normal working operating mode (SN) comprises an activation of a main radio module (2F) for transmitting and receiving messages and the wake-up circuit (2G) having a lower energy consumption than the main radio module (2F).

**16.** Network node according to claim 15,
the network node (2) having a memory for storing the wake-up token reference value (WUTRV).

**17.** Network node according to one of claims 15 or 16,
the network node (2) being a sensor network node comprising at least one sensor (3).

**18.** Network node according to one of claims 15 or 16,
the network node (2) being a portable telecommunication terminal.

**19.** Network node according to claim 18,
the telecommunication terminal being a mobile telephone, a laptop or a PDA.

**20.** Wireless network (1) comprising a plurality of network nodes (2) according to one of the preceding claims 15-19.

**21.** Computer program comprising program commands for implementing the method according to one of claims 1-14 when the computer program is executed.

**22.** Data carrier which stores the computer program according to claim 21.

**Revendications**

**1.** Procédé pour activer un noeud de réseau cible (SN) à réveiller d'un réseau sans fil (1), ledit noeud de réseau cible (SN) étant tiré d'un mode sommeil, lorsqu'un circuit de réveil intégré (2G) du noeud de réseau cible (SN) reçoit un jeton de réveil secret (WUT) et le vérifie au moyen d'une fonction de contrôle prédéfinie et d'au moins une valeur de référence du jeton de réveil (WUTRV) mise en mémoire, le réveil du noeud de réseau cible (SN) comprenant une activation d'un module radio principal (2F) servant à envoyer et recevoir des messages, et le circuit de réveil (2G) ayant une consommation d'énergie inférieure à celle du module radio principal (2F).

**2.** Procédé selon la revendication 1,
le jeton de réveil secret (WUT) et la valeur de référence du jeton de réveil (WUTRV) étant générés par le noeud de réseau cible (SN) lui-même et étant transférés, avant que le noeud de réseau cible (SN) passe en mode sommeil, à un autre noeud de réseau (WN, SM) du réseau (1) pour y être mis en mémoire en vue d'une activation ultérieure du noeud de réseau cible (SN).

**3.** Procédé selon la revendication 1,
le jeton de réveil (WUT) et la valeur de référence du jeton de réveil (WUTRV) étant générés par un autre noeud de réseau (SM, WN) du réseau (1), la valeur de référence du jeton de réveil (WUTRV) étant transférée, avant que le noeud de réseau cible (SN) passe en mode sommeil, au noeud de réseau cible (NWK) pour y être mise en mémoire en vue d'une activation ultérieure du noeud de réseau cible (SN).

**4.** Procédé selon la revendication 3,
le jeton de réveil (WUT) et la valeur de référence du jeton de réveil (WUTRV) étant générés par un noeud de gestion de sécurité central (SM).

**5.** Procédé selon la revendication 4,
la valeur de référence du jeton de réveil (WUTRV) générée étant transmise du noeud de gestion de sécurité central (SM) au noeud de réseau cible (SN) et mise en mémoire dans le noeud de réseau cible (SN) avant que le noeud de réseau cible (SN) passe en mode sommeil.

**6.** Procédé selon la revendication 5,
le jeton de réveil (WUT) généré étant fourni par le noeud de gestion de sécurité central (SM) à un noeud de réseau (WN) pour activer le noeud de réseau cible (SN).

7. Procédé selon la revendication 1, la valeur de référence du jeton de réveil (WUTRV) étant générée par le noeud de réseau cible (NWK) et le jeton de réveil (WUT) par un autre noeud de réseau (SM, WN) du réseau sans fil (1) sur la base d'une clé secrète (K) commune.

8. Procédé selon la revendication 7, la valeur de référence du jeton de réveil (WUTRV) et le jeton de réveil (WUT) étant formés à partir de la clé (K) au moyen d'une fonction dérivée (KDF).

9. Procédé selon la revendication 8, la fonction dérivée (KDF) étant une fonction de hachage.

10. Procédé selon l'une des revendications 1-9, le jeton de réveil (WUT) et la valeur de référence du jeton de réveil (WUTRV) étant renouvelés après chaque opération d'activation du noeud de réseau cible (SN) ou après un nombre prédéterminé d'opérations d'activation du noeud de réseau cible (SN) ou à des intervalles de temps prédéterminés.

11. Procédé selon la revendication 9, le jeton de réveil (WUT) et la valeur de référence du jeton de réveil (WUTRV) mise en mémoire étant formés par deux maillons voisins d'une chaîne de hachage constituée de valeurs de hachage.

12. Procédé selon l'une des revendications 1-11, le jeton de réveil (WUT) et la valeur de référence du jeton de réveil (WUTRV) étant déduits d'une chaîne de caractères.

13. Procédé selon la revendication 12, la chaîne de caractères du jeton de réveil (WUT) étant composée d'une ou de plusieurs séquences de caractères.

14. Procédé selon la revendication 13, la séquence de caractères composable comportant :

    - un code d'identification (IC) servant à identifier le noeud de réseau qui envoie le jeton de réveil (WUT) au noeud de réseau cible (NWK) en vue de l'activation de celui-ci,
    - un code de raison (RC) qui indique une raison de l'activation du noeud de réseau cible (NWK),
    - un code de réveil conditionnel qui indique une condition de l'activation du noeud de réseau cible (NWK),
    - une adresse du noeud de réseau cible (NWK) ou
    - un code de réveil prédéfini.

15. Noeud de réseau (2) pour un réseau sans fil (1) comportant un circuit de réveil intégré (2G) pour faire passer le noeud de réseau (2) d'un mode sommeil à un mode de travail normal, lorsque le circuit de réveil (2G) reçoit un jeton de réveil secret (WUT) et le vérifie au moyen d'une fonction de contrôle prédéfinie et d'au moins une valeur de référence du jeton de réveil (WUTRV) mise en mémoire, le passage du noeud de réseau en mode de travail normal (SN) comprenant une activation d'un module radio principal (2F) servant à envoyer et recevoir des messages, et le circuit de réveil (2G) ayant une consommation d'énergie inférieure à celle du module radio principal (2F).

16. Noeud de réseau selon la revendication 15, le noeud de réseau (2) comportant une mémoire pour mémoriser la valeur de référence du jeton de réveil (WUTRV).

17. Noeud de réseau selon l'une des revendications 15 ou 16, le noeud de réseau (2) étant un noeud de réseau à capteur comprenant au moins un capteur (3).

18. Noeud de réseau selon l'une des revendications 15 ou 16, le noeud de réseau (2) étant un terminal de télécommunication portable.

19. Noeud de réseau selon la revendication 18, le terminal de télécommunication étant un téléphone mobile, un ordinateur portable ou un PDA.

20. Réseau sans fil (1) comprenant plusieurs noeuds de réseau (2) selon l'une des revendications précédentes 15-19.

21. Programme d'ordinateur comprenant des instructions de programme pour la mise en oeuvre du procédé selon l'une des revendications 1-14 lorsque le programme d'ordinateur est exécuté.

22. Support de données mémorisant le programme d'ordinateur selon la revendication 21.

# FIG 1

# FIG 2

# FIG 3

# FIG 4

# FIG 5

WN                                    SN  S5-1

┌─────────────────┐
│   2 WUTRV       │
│  Generiere WUT, │
│     WUTRV       │
└─────────────────┘

          S5-2
← WUT Value

┌─────────────────┐
│   Speichere     │
│     WUT         │
└─────────────────┘
                                      S5-4
      S5-3                    ┌─────────────────┐
                             │ Aktiviere Schlaf-│
                             │  Betriebsmodus   │
                             └─────────────────┘

   S5-5

┌─────────────────┐
│    Erfasse      │
│ Aufweckbedingung│
└─────────────────┘
                     S5-6
WUT - - - - - - - - - - - - →
                                           S5-7
                             ┌─────────────────┐
                             │   verifiziere    │
                             │      WUT         │
                             └─────────────────┘

  S5-8
         Datenanforderung      →
←         Daten

              S5-9

# FIG 6

WN　　　　　　　WN2　　　　　　　SN　S6-1

8 WUTRV
Generiere WUT,
WUTRV

S6-2

WUT

Speichere
WUT

S6-3

S6-4

Aktiviere
Schlaf-Betriebsmodus

S6-5

WUT2

verifiziere
WUT2
(erfolglos)

S6-6

Erfasse
Aufweckbedingung

S6-7

WUT

S6-8

verifiziere
WUT
(erfolgreich)

S6-9

Datenanforderung

Daten

S6-10

# FIG 7

# FIG 8

SM    S8-1        WN          SN

Create WUT
value 2
WUTRV value

Generiere
WUT, WUTRV    WUTRV Value     S8-2      S8-3

Speichere
WUTRV

S8-4

Aktiviere
Schlaf-Betriebsmodus

S8-5

Erfasse
Aufweckbedingung

Anforderung WUT

S8-7    S8-6

WM berechtigt ?

S8-8

WUT        WUT     S8-9      S8-10

verifiziere
WUT

Datenanforderung    S8-11

Daten

S8-12

# FIG 9

SM   WN   SN   S9-1

Generiere WUT, WUTRV — Create WUT value 2 WUTRV

Speichere WUTRV   S9-2

S9-3   WUT

S9-4   Speichere WUT

S9-5   Aktiviere Schlaf-Betriebs-modus

S9-6   Erfasse Aufweckbedingung

Anforderung WUT

S9-8   S9-7

WM berechtigt ?

S9-9   WUT

WUT   S9-10   S9-11

verifiziere WUT

S9-12   Datenanforderung

Daten

S9-13

# FIG 10

WN                                                          SN

S10-1

Berechne
$H_1, H_2 \ldots H_n$

$H_n$    S10-2                    S10-3

Speichere $H_n$
als WUTRV

S10-4

Aktiviere
Schlaf-Betriebsmodus

S10-5

Erfasse
Aufweckbedingung

WUT = $H_n$-1    S10-6

S10-7

verifiziere WUT
mittels WUTRV
(hier ok): WAKE UP

Datenanforderung    S10-8

Daten

S10-9

# FIG 11

WN S11-1

Generiere
WUT = $KDF_1(K)$

S11-3

Speichere WUT

S11-6

Erfasse
Aufweckbedingung

SN S11-2

Generiere
WUTRV = $KDF_2(K)$

S11-4

Speichere WUTRV

S11-5

Aktiviere
Schlaf-Betriebsmodus

WUT ────────── S11-7

S10-8

verifiziere WUT
mittels WUTRV
(hier ok): WAKE UP

S11-9

Datenanforderung

Daten

S11-10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6493824 B1
- US 20050138377 A1
- US 20060112287 A1
- WO 0033598 A
- JP 2008283460 A